# EUROPÄISCHE PATENTSCHRIFT

(11) **EP 4 028 345 B1**
(45) Veröffentlichungstag und Bekanntmachung des Hinweises auf die Patenterteilung: **27.09.2023**
(21) Anmeldenummer: 20750612.2
(22) Anmeldetag: 23.07.2020
(51) Int. Cl.: B65G 60/00, B23P 19/00, B23Q 7/14, F16P 3/08

(54) **AUTOMATISIERT UND MANUELL BESCHICKBARE AUTOMATIONSZELLE**
AUTOMATION CELL WHICH CAN BE LOADED AUTOMATICALLY AND MANUALLY
CELLULE D'AUTOMATISATION POUVANT ÊTRE CHARGÉE AUTOMATIQUEMENT ET MANUELLEMENT

(30) Priorität: 13.09.2019 DE 102019214007
(43) Veröffentlichungstag der Anmeldung: 20.07.2022
(73) Patentinhaber: FELSOMAT GmbH & Co. KG, 75203 Königsbach-Stein (DE)
(72) Erfinder: KIRSCH, Roger, 76307 Karlsbad (DE)
(74) Vertreter: Kohler Schmid Möbus Patentanwälte
(86) Internationale Anmeldenummer: PCT/EP2020/070835
(87) Internationale Veröffentlichungsnummer: WO 2021/047810

(56) Entgegenhaltungen:
- EP-A2- 1 125 678
- US-A1- 2015 112 483

## Beschreibung

Die Erfindung betrifft eine Automationszelle zur Handhabung von Teileträgern, aufweisend
- eine Einhausung, innerhalb der ein erster Stapelplatz, ein zweiter Stapelplatz und ein dritter Stapelplatz für Teileträger angeordnet sind, wobei die Einhausung eine Beschickungsöffnung für den ersten Stapelplatz aufweist,
- eine Umsetzeinrichtung zum Umsetzen von Teileträgern zwischen den Stapelplätzen, und
- eine Abtrenneinrichtung, um wahlweise den ersten Stapelplatz nach innen abzutrennen oder freizugeben.

Eine solche Automationszelle ist aus EP 1 125 678 B1 bekannt.

Automationszellen werden zum Ein- und Ausschleusen von Teilen in Fertigungsanlagen eingesetzt. Die Teile werden auf Teileträgern bereitgestellt. Die Teileträger werden in Form von Stapeln der Automationszelle zugeführt bzw. aus der Automationszelle entnommen. Dies wird als Beschicken bezeichnet. Innerhalb der Automationszelle werden die Teile aus den Teileträgern entnommen bzw. nach Bearbeitung in die Teileträger eingesetzt. Die Teileträger werden dabei mittels einer Umsetzeinrichtung umgestapelt, um auf jeden der Teileträger zugreifen zu können.

Die aus EP 1 125 678 B1 bekannte Automationszelle ist ausschließlich für ein manuelles Beschicken eingerichtet. Die Automationszelle weist eine Bedienungstür auf, durch welche die Beschickungsöffnung wahlweise verschließbar oder freigebbar ist. Zum Abtrennen des ersten Stapelplatzes ist eine Haube vorgesehen, welche über den ersten Stapelplatz verfahrbar ist. Durch Verriegelungselemente an der Haube und an der Bedienungstür ist sichergestellt, dass die Bedienungstür nur geöffnet werden kann, wenn sich die Haube über dem ersten Stapelplatz befindet. Dadurch wird auf mechanischem Wege verhindert, dass Bedienpersonal über den ersten Stapelplatz hinaus in einen Innenraum der Automationszelle hineingreifen kann.

### Aufgabe der Erfindung

Es ist Aufgabe der Erfindung, eine sicher betreibbare Automationszelle anzugeben, die sowohl automatisiert als auch manuell beschickt werden kann.

### Beschreibung der Erfindung

Diese Aufgabe wird erfindungsgemäß gelöst durch eine Automationszelle der eingangs genannten Art, die dadurch gekennzeichnet ist, dass die Automationszelle ein Sicherungssystem für einen Eingriffsbereich an der Beschickungsöffnung aufweist, das dazu eingerichtet ist,
- in einem Vollüberwachungsbetrieb den gesamten Eingriffsbereich zu überwachen,
- in einem Teilüberwachungsbetrieb nur einen Teilbereich, insbesondere einen äußeren Teilbereich, des Eingriffsbereichs zu überwachen, und
- einen Betrieb der Automationszelle zu unterbrechen, wenn das Sicherungssystem einen Eingriff erkennt,
   und dass die Automationszelle dazu eingerichtet ist,
- in einem automatischen Beschickungsmodus das Sicherungssystem in den Teilüberwachungsbetrieb zu schalten, wenn zuvor ein automatisierter Beschickungsvorgang angemeldet wurde, und nach Abschluss des automatisierten Beschickungsvorgangs, das Sicherungssystem in den Vollüberwachungsbetrieb zu schalten, und
- in einem manuellen Beschickungsmodus das Sicherungssystem zu deaktivieren, wenn die Abtrenneinrichtung den ersten Stapelplatz abtrennt, und das Sicherungssystem in den Vollüberwachungsbetrieb zu schalten, bevor die Abtrenneinrichtung den ersten Stapelplatz freigibt.

Die erfindungsgemäße Automationszelle dient zur Handhabung von Teileträgern. Die Automationszelle wird im Betrieb mit Stapeln von Teileträgern beschickt. Unter Beschicken wird vorliegend sowohl das Einführen als auch das Entnehmen eines Stapels von Teileträgern durch die Beschickungsöffnung verstanden. Der Stapel umfasst wenigstens einen Teileträger, meist mehrere Teileträger. Der Stapel ist typischerweise auf einem Transportwagen des Stapels angeordnet. In Sonderfällen kann der Stapel auch nur den Transportwagen (und keinen Teileträger) umfassen. Jeder der Teileträger trägt typischerweise wenigstens ein Teil. In Sonderfällen können auch leere Teileträger in die Zelle eingeschleust bzw. aus der Automationszelle ausgeschleust werden.

Die Automationszelle weist wenigstens drei Stapelplätze für Teileträger, nämlich den ersten, den zweiten und den dritten Stapelplatz, auf. Typischerweise weist die Automationszelle mehr als drei Stapelplätze, insbesondere bis zu elf Stapelplätze, auf. Auf jedem der Stapelplätze ist jeweils ein Stapel von Teileträgern anordenbar bzw. platzierbar.

Die Stapelplätze sind innerhalb einer Einhausung der Automationszelle, d. h. in einem Innenraum der Automationszelle, angeordnet. Die Einhausung bewirkt eine Abschottung des Innenraums von einer Umgebung der Automationszelle. Dadurch wird insbesondere verhindert, dass Personen in den Innenraum hineingreifen können oder in den Innenraum hinein gelangen können.

Die Umsetzeinrichtung dient zum Umsetzen von jeweils einem oder mehreren Teileträgern zwischen den Stapelplätzen. Dies erlaubt es, auf jeden der Teileträger zugreifen zu können. Die Umsetzeinrichtung kann einen Palettenumsetzer umfassen. Die Umsetzeinrichtung kann an einem Rahmen oder der Einhausung der Automationszelle verfahrbar angebracht sein. Die Umsetzeinrichtung kann als ein Automationssystem z.B. ein Portal oder ein Roboter mit einer Greifeinheit ausgeführt sein.

Die Automationszelle kann eine Handhabungseinrichtung zum Handhaben von Teilen aufweisen, insbesondere um Teile aus einem der Teileträger zu entnehmen bzw. in einen der Teileträger einzusetzen. Mittels der Handhabungseinrichtung können die Teile insbesondere einer an die Automationszelle angeschlossenen Fertigungseinrichtung, typischerweise einer Werkzeugmaschine, zugeführt werden bzw. von der Fertigungseinrichtung nach erfolgter Bearbeitung in einen der Teileträger zurückgelegt werden.

Der erste Stapelplatz dient zum Beschicken der Automationszelle mit Stapeln von Teileträgern. Der erste Stapelplatz kann daher auch als Beladeplatz bezeichnet werden. Über die Beschickungsöffnung ist der erste Stapelplatz von außen zugänglich. Außerhalb eines Beschickungsvorgangs können auch aus Teileträgern an dem ersten Stapelplatz Teile entnommen werden bzw. es können Teile auf einen Teileträger an dem ersten Stapelplatz verbracht werden.

Mittels der Abtrenneinrichtung kann der erste Stapelplatz nach innen abgetrennt oder freigegeben werden. Die Abtrenneinrichtung dient mit anderen Worten zum Abtrennen des ersten Stapelplatzes von einem übrigen Innenraum der Einhausung, insbesondere von dem zweiten und dem dritten Stapelplatz und gegebenenfalls den weiteren Stapelplätzen. Im abgetrennten Zustand des ersten Stapelplatzes ist es mithin nicht möglich, von der Beschickungsöffnung aus über den ersten Stapelplatz hinaus in den Innenraum der Automationszelle einzugreifen oder zu gelangen. Ferner ist es im abgetrennten Zustand nicht möglich, dass die Umsetzeinrichtung auf den ersten Stapelplatz zugreift. Dadurch kann eine Gefährdung von Personen vermieden werden. Im freigegebenen Zustand des ersten Stapelplatzes können Teileträger mittels der Umsetzeinrichtung zwischen dem ersten Stapelplatz und einem der weiteren Stapelplätze ausgetauscht werden. Die Abtrenneinrichtung kann eine über den Stapelplätzen, insbesondere über dem ersten und dem zweiten Stapelplatz, verschiebbare Haube umfassen.

Erfindungsgemäß ist vorgesehen, dass die Automationszelle ein Sicherungssystem für einen Eingriffsbereich an der Beschickungsöffnung aufweist. Das Sicherungssystem dient dazu, den Eingriffsbereich zu überwachen und im Falle eines Eingriffs in den Eingriffsbereich einen Betrieb der Automationszelle zu unterbrechen. Mit anderen Worten hält das Sicherungssystem die Automationszelle an bzw. schaltet die Automationszelle ab, wenn es einen Eingriff in den Eingriffsbereich erkennt. Der Eingriffsbereich umfasst zumindest die Beschickungsöffnung und vorzugsweise einen die Beschickungsöffnung umgebenden Umgrenzungsbereich, insbesondere der Einhausung.

Zum Überwachen des Eingriffsbereichs ist das Sicherungssystem in einen Vollüberwachungsbetrieb und einen Teilüberwachungsbetrieb schaltbar. Im Vollüberwachungsbetrieb überwacht das Sicherungssystem den gesamten Eingriffsbereich. Das Sicherungssystem befindet sich standardmäßig im Vollüberwachungsbetrieb.

Im Teilüberwachungsbetrieb überwacht das Sicherungssystem nur einen Teilbereich des Eingriffsbereichs. Der im Teilüberwachungsbetrieb überwachte Teilbereich ist vorzugsweise ein äußerer Teilbereich, mit anderen Worten ein Randbereich, des Eingriffsbereichs. Der verbleibende Restbereich des Eingriffsbereichs wird im Teilüberwachungsbetrieb nicht überwacht. Im Teilüberwachungsbetrieb ist mit anderen Worten ein Einführbereich für einen Teilestapel (der nicht überwachte Restbereich) von der Überwachung durch das Sicherungssystem ausgenommen. Der Einführbereich ist typischerweise geringfügig größer als der Stapel von Teileträgern und/oder ein fahrerloses Transportsystem zum Transport des Stapels. Das Sicherungssystem ist vorzugsweise dazu ausgebildet, eine Größe des im Teilüberwachungsbetrieb überwachten Teilbereichs an eine Größe des einzuführenden bzw. zu entnehmenden Stapels von Teileträgern und/oder des fahrerlosen Transportsystems anzupassen, und insbesondere während eines Beschickungsvorgangs zu verändern.

Erfindungsgemäß ist weiterhin vorgesehen, dass die Automationszelle dazu eingerichtet ist, in einen automatischen Beschickungsmodus das Sicherungssystem in den Teilüberwachungsbetrieb zu schalten, wenn zuvor ein automatisierter Beschickungsvorgang angemeldet wurde. Im Teilüberwachungsbetrieb des Sicherungssystems kann ein Stapel von Teileträgern automatisiert, beispielsweise mittels eines fahrerlosen Transportsystems, durch den (nicht überwachten) Einführbereich der Beschickungsöffnung auf den ersten Stapelplatz verbracht bzw. von dem ersten Stapelplatz entnommen werden. Außerhalb des Einführbereichs, d. h. im überwachten Teilbereich, erkennt das Sicherungssystem auch im Teilüberwachungsbetrieb einen Eingriff. Falls jemand während eines automatisierten Beschickungsvorgangs versehentlich oder absichtlich neben einem Stapel von Teileträgern in den Eingriffsbereich eingreifen sollte, würde das Sicherungssystem daher den Betrieb der Automationszelle unterbrechen, um Verletzungen zu vermeiden.

Nach Abschluss des Beschickungsvorgangs schaltet die Automationszelle das Sicherungssystem wieder in den Vollüberwachungsbetrieb. Dadurch kann erreicht werden, dass außerhalb des angemeldeten Beschickungsvorgangs jeder Eingriff in den Eingriffsbereich an der Beschickungsöffnung von dem Sicherungssystem erkannt wird und ein ggf. erfolgender Eingriff zu einem Unterbrechen des Betriebs der Automationszelle führt.

Erfindungsgemäß ist ferner vorgesehen, dass die Automationszelle dazu eingerichtet ist, in einem manuellen Beschickungsmodus das Sicherungssystem zu deaktivieren, wenn die Abtrenneinrichtung den ersten Stapelplatz abtrennt. Das Deaktivieren des Sicherungssystems ist mithin nur möglich, wenn der erste Stapelplatz durch die Abtrenneinrichtung vom restlichen Innenraum der Automationszelle abgegrenzt ist. Bei deaktiviertem (abgeschaltetem) Sicherungssystem, d. h. nicht überwachter Beschickungsöffnung, kann ein manueller Beschickungsvorgang stattfinden. Ein Stapel von Teileträgern kann durch die Beschickungsöffnung von einem Bediener auf den ersten Stapelplatz verbracht bzw. von dem ersten Stapelplatz entfernt werden, ohne dass das Sicherungssystem den Betrieb der Automationszelle unterbricht. Durch die Abtrenneinrichtung ist dabei sichergestellt, dass der Bediener nicht über den ersten Stapelplatz hinaus in den Innenraum der Automationszelle eingreifen bzw. vordringen kann. Dies minimiert die Verletzungsgefahr für den Bediener und hilft Fehlbedienungen und Beschädigungen der Automationszelle zu vermeiden.

Bevor die Abtrenneinrichtung den ersten Stapelplatz freigibt, wird das Sicherungssystem wieder in den Vollüberwachungsbetrieb geschaltet. Die Automationszelle ist mit anderen Worten dazu eingerichtet, den ersten Stapelplatz nur dann freizugeben, wenn sich das Sicherungssystem im Vollüberwachungsbetrieb befindet. Dadurch kann erreicht werden, dass im manuellen Beschickungsmodus bei freigegebenem erstem Stapelplatz jeglicher Eingriff in den Eingriffsbereich an der Beschickungsöffnung durch das Sicherungssystem erkannt wird und zu einem Anhalten der Automationszelle führt. Dadurch wird die Verletzungsgefahr für Bedienpersonal weiter minimiert.

Durch die unterschiedlichen Überwachungsmodi des Sicherungssystems im Zusammenspiel mit der Abtrenneinrichtung kann die erfindungsgemäße Automationszelle sowohl automatisiert als auch manuell beschickt werden. Ein Umrüsten der Automationszelle ist hierbei nicht erforderlich. Da das Sicherungssystem bei freigegebenem erstem Stapelplatz zumindest einen Teilbereich des Eingriffsbereichs überwacht, werden Verletzungsgefahren wirkungsvoll minimiert.

Die Automationszelle kann eine elektronische Steuerung aufweisen, die sowohl das Sicherungssystem, die Umsetzeinrichtung, die Abtrenneinrichtung und ggf. die Handhabungseinrichtung steuert. Die gemeinsame Steuerung vereinfacht die interne Kommunikation. Die elektronische Steuerung kann für die Ausführung des automatischen und des manuellen Beschickungsmodus sowie des Vollüberwachungsbetriebs und des Teilüberwachungsbetriebs programmiert sein. Alternativ kann vorgesehen sein, dass das Sicherungssystem eine eigene elektronische Steuerungseinrichtung aufweist, die für die Ausführung des Vollüberwachungsbetriebs und des Teilüberwachungsbetriebs programmiert ist. Die Automationszelle kann in diesem Fall ein übergeordnetes elektronisches Steuerungssystem aufweisen, das für die Ausführung des Betriebs der Automationszelle im Übrigen programmiert ist.

Die Automationszelle kann vorteilhafterweise mit einem unten beschriebenen, erfindungsgemäßen Verfahren manuell beschickt werden. Zum automatisierten Beschicken kann die Automationszelle vorteilhaft zu einem unten beschriebenen, erfindungsgemäßen Automationssystem erweitert werden und mit einem unten beschriebenen, erfindungsgemäßen Verfahren automatisiert beschickt werden.

### Bevorzugte Ausführungsformen

Bei einer besonders bevorzugten Ausführungsform ist vorgesehen, dass die Automationszelle, dazu eingerichtet ist, das Sicherungssystem nur dann in den Teilüberwachungsbetrieb zu schalten, wenn sich ein Stapel von Teileträgern unmittelbar vor der Beschickungsöffnung befindet. Dadurch kann erreicht werden, dass es nicht möglich ist, vor dem Stapel von Teileträgern in den nicht überwachten Einführbereich hineinzugreifen. Der Stapel von Teileträgern befindet sich insbesondere dann unmittelbar vor der Beschickungsöffnung, wenn ein Abstand des Stapels von der Beschickungsöffnung höchstens zehn Zentimeter, bevorzugt höchstens fünf Zentimeter, ganz besonders bevorzugt höchstens zwei Zentimeter, beträgt.

Eine weitere besonders bevorzugte Ausführungsform ist dadurch gekennzeichnet, dass das Sicherungssystem für eine berührungslose, insbesondere optische, Überwachung ausgebildet ist. Bei einem berührungslos arbeitenden Sicherungssystem kann der im Teilüberwachungsbetrieb zu überwachende Teilbereich flexibel definiert werden. Insbesondere kann für jeden automatisierten Beschickungsvorgang die Größe des zu überwachenden Teilbereichs - und mithin die Größe des nicht überwachten Einführbereichs - an die Größe des zur Beschickung angemeldeten Stapels von Teileträgern angepasst werden. Dadurch kann wirkungsvoll vermieden werden, dass ein vom Sicherungssystem unbemerkter manueller Eingriff in den nicht überwachten Einführbereich nahe an dem Stapel von Teileträgern erfolgen kann. Das Sicherungssystem kann einen oder vorzugsweise zwei Laserscanner aufweisen. Das Sicherungssystem kann mit einem Lichtgitter ausgebildet sein. Das Sicherungssystem kann alternativ oder zusätzlich zur optischen Überwachung für eine akustische Überwachung, insbesondere mittels Ultraschall, ausgebildet sein.

Alternativ oder zusätzlich zur berührungslosen Überwachung kann vorgesehen sein, dass das Sicherungssystem für ein Erkennen von Berührungen ausgebildet ist, insbesondere wobei das Sicherungssystem wenigstens eine Berührschutzleiste aufweist. Durch eine Berührungserkennung kann die Gefahr des Einklemmens, insbesondere von Fingern, Händen oder Armen, weiter verringert werden. Die Berührschutzleiste ist dazu ausgebildet, bei Berührungen, insbesondere welche eine vordefinierte Mindestberührkraft übersteigen, ein Signal auszulösen, welches zum Unterbrechen des Betriebs der Automationszelle führt. Die Berührschutzleiste kann an einem Rand der Beschickungsöffnung angeordnet sein. Alternativ kann die Berührschutzleiste der Beschickungsöffnung vorgelagert angeordnet sein, etwa an einer von der Einhausung abragenden (abstehenden) Seitenwange. An der Seitenwange kann zwischen der Berührschutzleiste und der Beschickungsöffnung ein Führungselement angeordnet sein, um einen Stapel von Teileträgern zur Beschickungsöffnung hin zu führen.

Eine vorteilhafte Ausführungsform ist dadurch gekennzeichnet, dass das Sicherungssystem eine Verschlusseinrichtung für die Beschickungsöffnung aufweist. Im Vollüberwachungsbetrieb des Sicherungssystems verschließt die Verschlusseinrichtung die Beschickungsöffnung. Im geschlossenen Zustand verhindert die Verschlusseinrichtung einen Eingriff in die Beschickungsöffnung. Das Sicherungssystem ist dazu ausgebildet, bei einem Versuch, die Verschlusseinrichtung während des Vollüberwachungsbetriebs zu öffnen, ein Signal auszulösen, welches zum Unterbrechen des Betriebs der Automationszelle führt. Im Teilüberwachungsbetrieb kann die Beschickungsöffnung ganz oder teilweise von der Verschlusseinrichtung freigebbar sein. In einem deaktivierten Zustand des Sicherungssystems kann die Verschlusseinrichtung die Beschickungsöffnung vollständig freigeben. Die Verschlusseinrichtung kann manuell oder motorisch öffenbar sein. Die Verschlusseinrichtung kann mit einem Rolltor oder einem Sektionaltor ausgebildet sein.

Bei einer vorteilhaften Weiterbildung dieser Ausführungsform ist vorgesehen, dass die Verschlusseinrichtung und die Abtrenneinrichtung ein gemeinsames Trennelement aufweisen, welches wahlweise zum Verschließen der Beschickungsöffnung oder zum Abtrennen des ersten Stapelplatzes anordenbar ist. Dadurch kann erreicht werden, dass das Trennelement entweder die Beschickungsöffnung verschließt oder den ersten Stapelplatz nach innen abtrennt. Es ist mithin auf mechanischem Wege sichergestellt, dass bei offen stehender Beschickungsöffnung ein Eingreifen in den Innenraum der Automationszelle über den ersten Stapelplatz hinaus, insbesondere zu dem zweiten oder dritten Stapelplatz oder in einen Arbeitsbereich der Umsetzeinrichtung, nicht möglich ist. Gleichzeitig wird beim Verschließen der Beschickungsöffnung mittels des Trennelements das Trennelement aus dem Innenraum der Automationszelle entfernt, sodass es eine Bewegung der Umsetzeinrichtung und ein Umsetzen von Teileträgern zwischen den Stapelplätzen, insbesondere von dem oder zu dem ersten Stapelplatz, nicht behindert. Das Trennelement ist vorzugsweise Teil eines Sektionaltores.

Eine besonders bevorzugte Ausführungsform der Automationszelle ist dadurch gekennzeichnet, dass die Beschickungsöffnung an einem Vorbau der Einhausung ausgebildet ist. Der Vorbau richtet einen Abstand der Beschickungsöffnung von dem ersten Stapelplatz ein. Bei einem nicht autorisierten Eingriff in die Beschickungsöffnung bleibt damit mehr Zeit, um den Betrieb der Automationszelle zu unterbrechen. Damit kann zuverlässig erreicht werden, dass die Automationszelle, insbesondere die Umsetzeinrichtung, angehalten ist, bevor ein durch die Beschickungsöffnung unbefugt eindringendes Objekt, insbesondere eine Hand oder ein ballistisch bewegter Gegenstand, den ersten Stapelplatz erreicht. Möglichen Verletzungen und/oder Beschädigungen der Automationszelle dadurch wirkungsvoll vorgebeugt. Der Vorbau ragt typischerweise von einer, insbesondere vertikalen, Wand der Einhausung ab, welche an den ersten Stapelplatz angrenzt. Mit anderen Worten steht der Vorbau an der Einhausung nach außen vor. Der Vorbau umgibt die Beschickungsöffnung typischerweise seitlich und vorzugsweise auch oben.

Bei einer ganz besonders bevorzugten Weiterbildung dieser Ausführungsform ist vorgesehen, dass der Vorbau ein Dachsegment aufweist, welches in eine Abdeckstellung und in eine Öffnungsstellung verbringbar ist. Für ein automatisiertes Beschicken des ersten Stapelplatzes in dem automatischen Beschickungsmodus befindet sich das Dachsegment in der Abdeckstellung. In der Abdeckstellung trägt das Dachsegment zum Schutz vor einem nicht autorisierten Vordringen zum ersten Stapelplatz bei. Für ein manuelles Beschicken des ersten Stapelplatzes in dem manuellen Beschickungsmodus wird das Dachsegment typischerweise in die Öffnungsstellung überführt. Dies vereinfacht das manuelle Beschicken der Automationszelle, da das geöffnete Dachsegment es einem Bediener ermöglicht, nahe an den ersten Stapelplatz heranzutreten. Es kann vorgesehen sein, dass das Dachsegment nur dann in die Öffnungsstellung überführbar ist, wenn die Abtrenneinrichtung den ersten Stapelplatz nach innen abtrennt. Das Dachsegment kann zwischen der Abdeckstellung und der Öffnungsstellung verschwenkbar und/oder verschiebbar sein.

Eine vorteilhafte Ausführungsform der Automationszelle ist dadurch gekennzeichnet, dass an dem ersten Stapelplatz eine Ausrichteinrichtung zum Ausrichten eines Stapels von Teileträgern vorgesehen ist. Mittels der Ausrichteinrichtung kann der Stapel von Teileträgern in eine für die Weiterbearbeitung, insbesondere mittels der Umsetzeinrichtung, geeignete Position gebracht werden. Die Ausrichteinrichtung kann den Stapel von Teileträgern vorzugsweise bezüglich aller drei translatorischen und aller drei rotatorischen Freiheitsgrade ausrichten. Die Ausrichteinrichtung kann dazu ausgebildet sein, die Teileträger indirekt über einen Transportwagen des Stapels auszurichten. Der Transportwagen bildet dann eine Schnittstelle für die Ausrichteinrichtung, sodass die Ausrichteinrichtung für unterschiedliche Typen von Teileträgern, die insbesondere unterschiedliche Höhen aufweisen können, nicht angepasst werden muss.

Bei einer besonders bevorzugten Ausführungsform der Automationszelle ist vorgesehen, dass die Stapelplätze in einer Längsrichtung hintereinanderliegend angeordnet sind, und dass die Beschickungsöffnung für eine Beschickung in der Längsrichtung ausgerichtet ist. Eine solche Automationszelle kann besonders platzsparend in eine Fertigungsanlage integriert werden. Insbesondere wird durch die in der Längsrichtung erfolgende Beschickung nur wenig Fläche benötigt, um Stapel von Teileträgern zu der Automationszelle hin oder von der Automationszelle weg zu bringen. Die Stapelplätze liegen bei dieser Ausführungsform mit anderen Worten auf einer geraden Linie hintereinander.

Das Durchführen von Stapeln von Teileträgern durch die Beschickungsöffnung erfolgt entlang dieser gerade Linie. Um dies zu vereinfachen, erstreckt sich die Beschickungsöffnung typischerweise quer zu der Längsrichtung. Eine durch die Beschickungsöffnung definierte Ebene verläuft mit anderen Worten vorzugsweise senkrecht zu der Längsrichtung.

### Erfindungsgemäßes Automationssystem

In den Rahmen der vorliegenden Erfindung fällt auch ein Automationssystem umfassend eine oben beschriebene, erfindungsgemäße Automationszelle und ein fahrerloses Transportsystem zum Transportieren eines Stapels von Teileträgern. Mittels des fahrerlosen Transportsystems kann die Automationszelle im automatischen Beschickungsmodus besonders effizient beschickt werden. Das fahrerlose Transportsystem (sog. Automated Guided Vehicle, kurz AGV) ist vorzugsweise zum Unterfahren und Anheben eines Transportwagens für einen Stapel von Teileträgern ausgebildet. Das fahrerlose Transportsystem kann hierzu eine Hubeinrichtung aufweisen.

Das Automationssystem kann vorteilhafterweise mit einem unten beschriebenen, erfindungsgemäßen Verfahren automatisiert beschickt werden. Ferner ermöglicht das Automationssystem die vorteilhafte Durchführung eines unten beschriebenen erfindungsgemäßen Betriebsverfahrens mit manueller und automatisierter Beschickung.

Eine besonders bevorzugte Ausführungsform des Automationssystems ist dadurch gekennzeichnet, dass das Sicherungssystem dazu eingerichtet ist, das fahrerlose Transportsystem anzuhalten, wenn das Sicherungssystem einen Eingriff an der Beschickungsöffnung erkennt. Dadurch kann vermieden werden, dass Personen zwischen der Automationszelle und dem fahrerlosen Transportsystem bzw. einem Stapel von Teileträgern auf dem fahrerlosen Transportsystem eingeklemmt werden. Insbesondere auch während eines automatisierten Beschickungsvorgangs, bei dem sich das Sicherungssystem im Teilüberwachungsbetrieb befindet, wird das fahrerlose Transportsystem sofort angehalten, wenn ein Eingriff in den überwachten Teilbereich erfolgt. Im Rahmen eines unten beschriebenen, erfindungsgemäßen Betriebsverfahrens mit Auslösen des Sicherungssystems kann diese Ausführungsform sicher betrieben werden.

Bei einer vorteilhaften Ausführungsform ist vorgesehen, dass das fahrerlose Transportsystem dazu eingerichtet ist, einen Beschickungsvorgang bei der Automationszelle anzumelden. Dies vereinfacht die Kommunikation zwischen dem fahrerlosen Transportsystem und der Automationszelle. Die Anmeldung kann insbesondere erfolgen, wenn sich das fahrerlose Transportsystem unmittelbar vor der Automationszelle, insbesondere unmittelbar vor der Beschickungsöffnung, befindet. Dadurch kann auf einfache und effiziente Weise erreicht werden, dass der Vollüberwachungsbetrieb des Sicherungssystems bei einem unmittelbar bevorstehenden Beschickungsvorgang eingerichtet wird. Das fahrerlose Transportsystem befindet sich insbesondere dann unmittelbar vor der Automationszelle bzw. der Beschickungsöffnung, wenn ein Abstand zwischen dem fahrerlosen Transportsystem bzw. einem transportierten Stapel von Teileträgern und der Automationszelle bzw. der Beschickungsöffnung höchstens zehn Zentimeter, bevorzugt höchstens fünf Zentimeter, ganz besonders bevorzugt höchstens zwei Zentimeter, beträgt.

Eine besonders bevorzugte Weiterbildung dieser Ausführungsform ist dadurch gekennzeichnet, dass das fahrerlose Transportsystem dazu eingerichtet ist, der Automationszelle eine Größe eines durch die Beschickungsöffnung einzuführenden Stapels von Teileträgern mitzuteilen, und dass das Sicherungssystem dazu eingerichtet ist, eine Größe des im Teilüberwachungsbetrieb überwachten Teilbereichs des Eingriffsbereichs an die mitgeteilte Größe des Stapels von Teileträgern anzupassen. Mit anderen Worten ist das Sicherungssystem dazu eingerichtet, die Größe des im Teilüberwachungsbetrieb nicht überwachten Einführbereichs an die Größe des einzuführenden Stapels anzupassen. Dadurch kann erreicht werden, dass auch beim Einführen von kleinen Stapeln, d. h. Stapeln mit wenigen Teileträgern oder nur einem Transportwagen, keine Körperteile bzw. ganze Personen oder Gegenstände von dem Sicherungssystem unbemerkt durch die Beschickungsöffnung eingeführt werden können. Der überwachte Teilbereich kann hierzu in seiner Größe so an die Größe des einzuführenden Stapels angepasst werden, dass der Stapel unter Berücksichtigung der üblichen Abweichungen des fahrerlosen Transportsystems durch den nicht überwachten Einführbereich passt. Eine Grenze des überwachten Teilbereichs kann einer Hüllkontur des Stapels in einem geringen Abstand, insbesondere in einem Abstand von höchstens zehn Zentimetern, bevorzugt höchstens fünf Zentimetern, besonders bevorzugt höchstens zwei Zentimetern, folgen.

Vorzugsweise ist das Automationssystem für eine sichere Kommunikation zwischen der Automationszelle und dem fahrerlosen Transportsystem eingerichtet. Störungen der Kommunikation, aus denen eine Einschränkung der Sicherheit resultieren könnte, können dadurch vermieden werden. Ein Sicherheitsniveau der sicheren Kommunikation entspricht vorzugsweise mindestens Performancelevel C, Kategorie 3, besonders bevorzugt Performancelevel D, Kategorie 4, gemäß DIN EN ISO 13849-1. Es können redundant arbeitende Kommunikationseinrichtungen an der Automationszelle und dem fahrerlosen Transportsystem vorgesehen sein.

### Erfindungsgemäßes manuelles Beschickungsverfahren

In den Rahmen der Erfindung fällt ferner ein Verfahren zum manuellen Beschicken einer oben beschriebenen, erfindungsgemäßen Automationszelle mit den Schritten
a) Abtrennen des ersten Stapelplatzes nach innen,
b) Deaktivieren des Sicherungssystems,
c) Einführen und/oder Entnehmen eines Stapels von Teileträgern durch die Beschickungsöffnung,
d) Aktivieren des Sicherungssystems,
e) Freigeben des ersten Stapelplatzes.

Dieses Verfahren erlaubt ein sicheres manuelles Beschicken der Automationszelle. Hierzu wird das Sicherungssystem erst deaktiviert, nachdem der erste Stapelplatz abgetrennt wurde; ebenso wird der erste Stapelplatz erst wieder freigegeben, nachdem das Sicherungssystem wieder aktiviert wurde. Die Schritte des Verfahrens werden in der angegebenen Reihenfolge durchgeführt. Wenn die Automationszelle eine Verschlusseinrichtung und eine Abdeckeinrichtung mit einem gemeinsamen Trennelement aufweist, können die Schritte a) und b) sowie d) und e) gleichzeitig durchgeführt werden.

Bei der Durchführung des manuellen Beschickungsverfahrens befindet sich die Automationszelle grundsätzlich im manuellen Beschickungsmodus. Sie kann insbesondere vor der Durchführung von Schritt a) in den manuellen Beschickungsmodus geschaltet werden. Bei einem Eingriff in den Eingriffsbereich vor Schritt b) oder nach Schritt d) wird ein Betrieb der Automationszelle unterbrochen.

Während der Durchführung des Verfahrens, insbesondere auch während der Durchführung von Schritt c), läuft ein Betrieb der Automationszelle typischerweise weiter, d. h. es werden insbesondere Teileträger zwischen dem zweiten und dem dritten Stapelplatz und gegebenenfalls weiteren Stapelplätzen mittels der Umsetzeinrichtung umgesetzt. Dies erhöht die Effizienz der Automationszelle. Gegebenenfalls werden auch Teile mittels einer Handhabungseinrichtung aus den Teileträgern auf dem zweiten und/oder dem dritten Stapelplatz sowie gegebenenfalls den weiteren Stapelplätzen entnommen bzw. in diese eingesetzt.

Wenn die Automationszelle einen Vorbau mit einem öffenbaren Dachsegment aufweist, wird das Dachsegment zwischen den Schritten b) und c) in seine Öffnungsstellung verbracht und zwischen den Schritten c) und d) in seine Abdeckstellung verbracht. Das Öffnen des Dachsegments vereinfacht das manuelle Beschicken; das Schließen des Dachsegments erhöht die Sicherheit im weiteren Betrieb.

Wenn die Automationszelle ein Sicherungssystem mit einer Verschlusseinrichtung für die Beschickungsöffnung aufweist, wird die Verschlusseinrichtung in Schritt b) manuell oder motorisch geöffnet, vorzugsweise vollständig geöffnet, und in Schritt d) manuell oder motorisch geschlossen.

### Erfindungsgemäßes automatisiertes Beschickungsverfahren

In den Rahmen der vorliegenden Erfindung fällt weiterhin ein Verfahren zum automatisierten Beschicken der Automationszelle eines oben beschriebenen, erfindungsgemäßen Automationssystems mit den Schritten
A) Überwachen des gesamten Eingriffsbereichs an der Beschickungsöffnung,
B) Anmelden eines automatisierten Beschickungsvorgangs bei der Automationszelle,
C) Überwachen eines Teilbereichs, insbesondere eines äußeren Teilbereichs, des Eingriffsbereichs,
D) Einführen und/oder Entnehmen eines Stapels von Teileträgern durch die Beschickungsöffnung mittels des fahrerlosen Transportsystems,
E) Überwachen des gesamten Eingriffsbereichs.

Dieses Verfahren ermöglicht ein effizientes und sicheres automatisiertes Beschicken der Automationszelle. Hierzu wird die Überwachung des Eingriffsbereichs erst dann auf den Teilbereich eingeschränkt, nachdem ein automatisierter Beschickungsvorgang bei der Automationszelle angemeldet wurde; nach Beendigung des Beschickungsvorgangs wird die Überwachung wieder auf den gesamten Eingriffsbereich ausgedehnt. Die Schritte des Verfahrens werden in der angegebenen Reihenfolge durchgeführt, wobei die Überwachung des gesamten Eingriffsbereichs gemäß Schritt A) während der Durchführung von Schritt B) weiterläuft, und wobei die Überwachung des Teilbereichs gemäß Schritt C) während der Durchführung von Schritt D) weiterläuft.

Bei der Durchführung des automatisierten Beschickungsverfahrens befindet sich die Automationszelle grundsätzlich im automatischen Beschickungsmodus. Sie kann insbesondere vor der Durchführung von Schritt A) in den automatischen Beschickungsmodus geschaltet werden. Die Überwachung des gesamten Eingriffsbereichs in Schritt A) erfolgt im Vollüberwachungsbetrieb des Sicherungssystems.

Die Anmeldung des automatisierten Beschickungsvorgangs in Schritt B) erfolgt vorzugsweise durch das fahrerlose Transportsystem. Der Übergang zum Schritt C) erfolgt vorzugsweise erst, wenn das fahrerlose Transportsystem einen Stapel von Teileträgern unmittelbar vor die Beschickungsöffnung verbracht hat bzw. sich selbst unmittelbar vor der Beschickungsöffnung befindet. Das fahrerlose Transportsystem bzw. der Stapel befinden sich insbesondere dann unmittelbar vor der Beschickungsöffnung, wenn ein Abstand fahrerlosen Transportsystems bzw. des Stapels von Teileträgern von der Beschickungsöffnung höchstens zehn Zentimeter, bevorzugt höchstens fünf Zentimeter, ganz besonders bevorzugt höchstens zwei Zentimeter, beträgt.

Die Überwachung des Teilbereichs in Schritt C) erfolgt im Teilüberwachungsbetrieb des Sicherungssystems. Zur Durchführung von Schritt C) wird das Sicherungssystem in den Teilüberwachungsbetrieb geschaltet. Vorzugsweise wird eine Größe des überwachten Teilbereichs an eine Größe des einzuführenden bzw. zu entnehmenden Stapels von Teileträgern angepasst. Die Größe eines einzuführenden Stapels kann der Automationszelle von dem fahrerlosen Transportsystem mitgeteilt werden. Die Größe des überwachten Teilbereichs kann insbesondere so angepasst werden, dass eine Grenze des überwachten Teilbereichs einer Hüllkontur des Stapels in einem geringen Abstand, insbesondere in einem Abstand von höchstens zehn Zentimetern, bevorzugt höchstens fünf Zentimetern, besonders bevorzugt höchstens zwei Zentimetern, folgt.

Es kann weiterhin vorgesehen sein, dass die Größe des überwachten Teilbereichs während des Einführ- bzw. Entnahmevorgangs verändert wird. Insbesondere kann sich die Größe des überwachten Teilbereichs beim Durchführen des Stapels von Teileträgern und beim Durchführen eines Gehäuseabschnitts des fahrerlosen Transportsystems unterscheiden. Dies ist besonders nützlich, wenn die Beschickungsöffnung an einem Vorbau der Einhausung ausgebildet ist, da dann der erste Stapelplatz von der Beschickungsöffnung beanstandet ist, wodurch der Stapel von Teileträgern nicht unmittelbar hinter der Beschickungsöffnung abgestellt werden kann. Das fahrerlose Transportsystem muss in diesem Fall vielmehr ein Stück weit in den Vorbau hinein fahren. Die Größe des überwachten Teilbereichs kann insbesondere so verändert werden, dass eine Grenze des überwachten Teilbereichs einer Hüllkontur eines gerade durch die Beschickungsöffnung zu führenden Abschnitts des Stapels bzw. des fahrerlosen Transportsystems in einem geringen Abstand, insbesondere in einem Abstand von höchstens zehn Zentimetern, bevorzugt höchstens fünf Zentimetern, besonders bevorzugt höchstens zwei Zentimetern, folgt.

Während der Durchführung des Verfahrens, insbesondere auch während der Durchführung von Schritt D), läuft ein Betrieb der Automationszelle typischerweise weiter, d. h. es werden insbesondere Teileträger zwischen dem zweiten und dem dritten Stapelplatz sowie gegebenenfalls weiteren Stapelplätzen mittels der Umsetzeinrichtung umgesetzt. Gegebenenfalls werden auch Teile mittels einer Handhabungseinrichtung aus den Teileträgern auf dem zweiten und/oder dem dritten Stapelplatz sowie gegebenenfalls den weiteren Stapelplätzen entnommen bzw. diese eingesetzt.

Die Überwachung des gesamten Eingriffsbereichs in Schritt E) erfolgt im Vollüberwachungsbetrieb des Sicherungssystems. Zur Durchführung von Schritt E) wird das Sicherungssystem in den Vollüberwachungsbetrieb geschaltet. Bei einem Eingriff in den Eingriffsbereich bzw. dessen Teilbereich wird ein Betrieb der Automationszelle beendet.

Wenn die Automationszelle eine Verschlusseinrichtung für die Beschickungsöffnung aufweist, wird die Verschlusseinrichtung im Schritt C) vollständig oder teilweise geöffnet. Zur Durchführung von Schritt E) wird die Verschlusseinrichtung wieder geschlossen.

### Erfindungsgemäßes Betriebsverfahren für eine manuelle und automatische Beschickung

In den Rahmen der vorliegenden Erfindung fällt auch ein Betriebsverfahren für ein oben beschriebenes, erfindungsgemäßes Automationssystem, das dadurch gekennzeichnet ist, dass wenigstens ein Durchlauf eines oben beschriebenen, erfindungsgemäßen manuellen Beschickungsverfahrens und wenigstens ein Durchlauf eines oben beschriebenen, erfindungsgemäßen automatisierten Beschickungsverfahrens durchgeführt werden. Dieses Betriebsverfahren erlaubt einen effizienten Wechsel zwischen automatisierter und manueller Beschickung der Automationszelle. Zwischen den Verfahrensdurchläufen im manuellen und automatischen Beschickungsmodus wird die Automationszelle grundsätzlich nicht umgerüstet; es werden insbesondere keine baulichen Veränderungen an der Automationszelle vorgenommen und/oder Komponenten der Automationszelle ausgetauscht, entfernt und/oder hinzugefügt.

### Erfindungsgemäßes Betriebsverfahren mit Auslösen des Sicherungssystems

In den Rahmen der vorliegenden Erfindung fällt schließlich ein Betriebsverfahren für ein oben beschriebenes, erfindungsgemäßes Automationssystem, bei dem das Sicherungssystem dazu eingerichtet ist, das fahrerlose Transportsystem anzuhalten, mit den Schritten
K) Betreiben der Automationszelle und selbsttätiges Verfahren des fahrerlosen Transportsystems in einer Umgebung der Automationszelle, insbesondere Einführen und/oder Entnehmen eines Stapels von Teileträgern durch die Beschickungsöffnung mittels des fahrerlosen Transportsystems,
L) Auslösen des Sicherungssystems,
M) Unterbrechen des Betriebs der Automationszelle und Anhalten des fahrerlosen Transportsystems durch das Sicherungssystem.

Durch dieses Betriebsverfahren wird eine Gefährdung von Bedienpersonal, insbesondere die Gefahr des Einklemmens zwischen der Automationszelle und dem fahrerlosen Transportsystem wirkungsvoll verringert. Die Schritte des Verfahrens werden in der angegebenen Reihenfolge durchgeführt. Der Schritt K) kann vorteilhafterweise im Rahmen eines oben beschriebenen, erfindungsgemäßen Verfahrens zum automatisierten Beschicken durchgeführt werden. Beim Auslösen des Sicherungssystems kann sich dieses im Teilüberwachungsbetrieb oder im Vollüberwachungsbetrieb befinden. Das Auslösen des Sicherungssystems kann durch einen manuellen Eingriff oder durch das fahrerlose Transportsystem erfolgen.

Bei einer Variante dieses Verfahrens steht das Anhalten des fahrerlosen Transportsystems während des Vollüberwachungsbetriebs des Sicherungssystems unter der zusätzlichen Bedingung, dass sich das fahrerlose Transportsystem in einer nahen Umgebung, beispielsweise höchstens drei Meter von der Automationszelle entfernt, befindet. Dadurch kann ein unnötiges Anhalten des fahrerlosen Transportsystems vermieden werden, wenn sich dieses hinreichend weit von der Automationszelle entfernt befindet, so dass insbesondere keine Personen eingeklemmt werden können. Bei dieser Variante ist grundsätzlich vorgesehen, dass das fahrerlose Transportsystem angehalten wird, sobald es die nahe Umgebung der Automationszelle erreicht hat und insbesondere sofern der das Sicherungssystem auslösende Eingriff fortdauert. Das weitere Vordringen des fahrerlosen Transportsystems in die nahe Umgebung kann vorzugsweise erst erfolgen, wenn eine Behebung des auslösenden Eingriffs bestätigt wurde.

Weitere Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbespielen näher erläutert. Es zeigen:
- Fig. 1: ein erfindungsgemäßes Automationssystem mit einer erfindungsgemäßen Automationszelle und einem fahrerlosen Transportsystem zum Transportieren eines Stapels von Teileträgern, in einer schematischen Übersichtsansicht;
- Fig. 2a: das Automationssystem von Figur 1, wobei ein optisches Sicherungssystem einen gesamten Eingriffsbereich an einer Beschickungsöffnung für einen ersten Stapelplatz der Automationszelle überwacht, in einer schematischen Perspektivansicht mit teilweise gebrochen dargestellter Einhausung der Automationszelle;
- Fig. 2b: das Automationssystem gemäß Figur 2a in einer schematischen Aufsicht;
- Fig. 3: die Automationszelle des Automationssystems von Figur 1, wobei das Sicherungssystem nur einen äußeren Teilbereich des Eingriffsbereichs an der Beschickungsöffnung überwacht und wobei eine Abtrenneinrichtung den ersten Stapelplatz von einem Innenraum abtrennt, in einer schematischen Perspektivansicht mit teilweise gebrochen dargestellter Einhausung;
- Fig. 4a: das Automationssystem von Figur 1, wobei sich die Automationszelle im Zustand gemäß Figur 3 befindet und wobei das fahrerlose Transportsystem einen Stapel von Teileträgern durch die Beschickungsöffnung einführt, in einer schematischen Perspektivansicht mit teilweise gebrochen dargestellter Einhausung;
- Fig. 4b: das Automationssystem gemäß Figur 4a in einer schematischen Aufsicht;
- Fig. 5: die Automationszelle des Automationssystems von Figur 1 vor der Durchführung eines manuellen Beschickungsvorgangs durch einen Bediener, wobei das Sicherungssystem den gesamten Eingriffsbereich an der Beschickungsöffnung überwacht und wobei der erste Stapelplatz von der Abtrenneinrichtung freigegeben ist, in einer schematischen Perspektivansicht mit teilweise gebrochen dargestellter Einhausung;
- Fig. 6: die Automationszelle und den Bediener von Figur 5, wobei die Abtrenneinrichtung den ersten Stapelplatz abtrennt, das Sicherungssystem deaktiviert ist und sich ein Dachsegment eines Vorbaus der Einhausung in einer Abdeckstellung befindet, in einer schematischen Perspektivansicht mit teilweise gebrochen dargestellter Einhausung;
- Fig. 7: die Automationszelle und den Bediener von Figur 5, wobei sich das Dachsegment in einer Öffnungsstellung befindet und der Bediener einen Stapel von Teileträgern durch die Beschickungsöffnung zu dem ersten Stapelplatz verbringt, in einer schematischen Perspektivansicht mit teilweise gebrochen dargestellter Einhausung;
- Fig. 8: eine erfindungsgemäß Automationszelle, wobei ein Sicherungssystem eine Verschlusseinrichtung für die Beschickungsöffnung und Berührschutzleisten an Seitenwangen neben der Beschickungsöffnung umfasst, wobei die Verschlusseinrichtung die Beschickungsöffnung verschließt, in einer schematischen Perspektivansicht mit teilweise gebrochen dargestellter Einhausung;
- Fig. 9: die Automationszelle von Figur 8 mit geöffneter Verschlusseinrichtung und von einer Abtrenneinrichtung abgetrenntem erstem Stapelplatz, in einer schematischen Perspektivansicht mit teilweise gebrochen dargestellter Einhausung;
- Fig. 10: eine erfindungsgemäße Automationszelle, bei der eine Verschlusseinrichtung für die Beschickungsöffnung und eine Abtrenneinrichtung für den ersten Stapelplatz ein gemeinsames Trennelement aufweisen, das hier die Beschickungsöffnung verschließt und alternativ zum Abtrennen des ersten Stapelplatzes anordenbar ist, in einer schematischen Perspektivansicht mit teilweise gebrochen dargestellter Einhausung;
- Fig. 11: ein schematisches Ablaufdiagramm eines erfindungsgemäßen Verfahrens zum manuellen Beschicken einer Automationszelle;
- Fig. 12: ein schematisches Ablaufdiagramm eines erfindungsgemäßen Verfahrens zum automatisierten Beschicken einer Automationszelle eines Automationssystems;
- Fig. 13: ein schematisches Ablaufdiagramm eines Betriebsverfahrens mit manueller und automatisierter Beschickung einer Automationszelle eines Automationssystems;
- Fig. 14: ein schematisches Ablaufdiagramm eines Betriebsverfahrens für ein Automationssystem mit Auslösen eines Sicherungssystems für die Beschickungsöffnung.

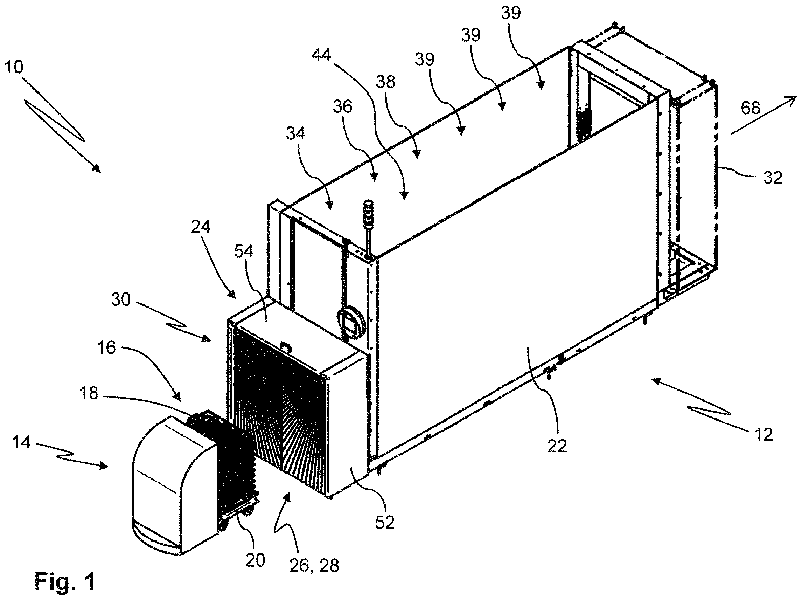

**Figur 1** zeigt ein erfindungsgemäßes Automationssystem **10.** Das Automationssystem 10 umfasst eine erfindungsgemäße Automationszelle **12** und ein fahrerloses Transportsystem **14.** Das fahrerlose Transportsystem 14 transportiert einen Stapel **16** von Teileträgern **18,** die auf einem Transportwagen **20** angeordnet sind.

Die Automationszelle 12 weist eine Einhausung **22** auf. Von der Einhausung 22 ragt ein Vorbau **24** ab, an dem eine Beschickungsöffnung **26** ausgebildet ist. Ein Eingriffsbereich **28** an der Beschickungsöffnung 26 wird durch ein Sicherungssystem **30** überwacht. Die Automationszelle 12 kann einen Schaltschrank **32** aufweisen, der hier rückseitig an der Einhausung 22 angeordnet ist. In dem Schaltschrank 32 kann eine nicht näher dargestellte elektronische Steuerung für die Automationszelle 12 ausgebildet sein.

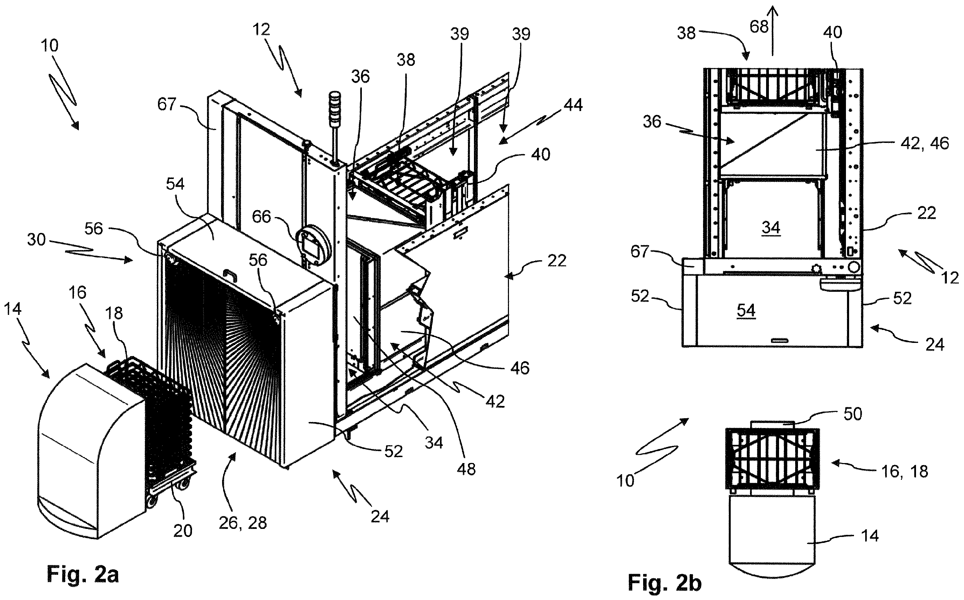

**Figur 2a** zeigt einen Ausschnitt des Automationssystems 10 von Figur 1. Die Einhausung 22 ist in Figur 2 teilweise entfernt bzw. gebrochen dargestellt. Innerhalb der Einhausung 22 sind ein erster Stapelplatz **34,** ein zweiter Stapelplatz **36,** ein dritter Stapelplatz **38** und mehrere weitere Stapelplätze **39** ausgebildet. Auf den Stapelplätzen 34, 36, 38, 39 ist jeweils ein Stapel 16 von Teileträgern 18 anordenbar. Die Automationszelle 12 weist eine Umsetzeinrichtung **40** auf. Mittels der Umsetzeinrichtung 40 können Teileträger 18 einzeln oder zu mehreren zwischen den Stapelplätzen 34, 36, 38, 39 umgesetzt werden. Die Umsetzeinrichtung 40 ist hier mit einem Palettenumsetzer ausgebildet.

Die Automationszelle 12 weist eine Abtrenneinrichtung **42** für den ersten Stapelplatz 34 auf. Mittels der Abtrenneinrichtung 42 kann der erste Stapelplatz 34 nach innen (von einem übrigen Innenraum **44** der Einhausung 22 mit den Stapelplätzen 36, 38, 39) abgetrennt oder freigegeben werden. Die Abtrenneinrichtung 42 umfasst hier eine verschiebliche Haube **46** und eine Schottwand **48.** Die Haube 46 ist über den Stapelplätzen 34, 36, 38, 39 verschieblich; insbesondere kann die Haube 46 über dem ersten Stapelplatz 34 oder dem zweiten Stapelplatz 36 angeordnet werden. Die Schottwand 48 ist feststehend zwischen dem ersten Stapelplatz 34 und dem zweiten Stapelplatz 36 angeordnet. Die Haube 46 befindet sich hier über dem zweiten Stapelplatz 36, vergleiche auch **Figur 2b****,** sodass die Abtrenneinrichtung 42 den ersten Stapelplatz 34 freigibt.

In Figur 2b ist ferner zu erkennen, dass das fahrerlose Transportsystem 14 eine Hubeinrichtung **50** zum Unterfahren und Anheben des Transportwagens 20 des Stapels 16 aufweist.

Der Vorbau 24 der Einhausung 22 weist zwei Seitenwangen **52** und ein Dachsegment **54** auf. In der in den Figuren 2a und 2b dargestellten Konfiguration befindet sich das Dachsegment 54 in einer Abdeckstellung. Die beiden Seitenwangen 52 und das Dachsegment 54 umgeben die Beschickungsöffnung 26 seitlich und von oben.

Das Sicherungssystem 30 der Automationszelle 12 ist für eine berührungslose, hier optische, Überwachung des Eingriffsbereichs 28 an der Beschickungsöffnung 26 ausgebildet. Das Sicherungssystem 30 weist zwei Laserscanner **56** auf. Die Laserscanner 56 können jeweils in oberen Ecken des Vorbaus 24 an der Beschickungsöffnung 26 angeordnet sein.

In Figur 2a befindet sich das Sicherungssystem 30 in einem Vollüberwachungsbetrieb. In dem Vollüberwachungsbetrieb überwacht das Sicherungssystem 30 den gesamten Eingriffsbereich 28. Die Laserscanner 56 sind im Vollüberwachungsbetrieb dazu eingerichtet, jeglichen Eingriff in die Beschickungsöffnung 26 zu erkennen. Sofern das Sicherungssystem 30 einen Eingriff in den Eingriffsbereich 28 erkennt, unterbricht das Sicherungssystem 30 einen Betrieb der Automationszelle 12 und sendet dem fahrerlosen Transportsystem 14 einen Befehl, der dieses zum Anhalten zwingt. Beim Unterbrechen des Betriebs der Automationszelle 12 wird insbesondere die Umsetzeinrichtung 40 angehalten. Falls vorhanden, wird auch eine hier nicht näher dargestellte Handhabungseinrichtung der Automationszelle 12 angehalten.

Die Handhabungseinrichtung dient zum Handhaben von auf den Teileträgern 18 bereitgestellten, ebenfalls nicht näher dargestellten Teilen.

Die Figuren 2a und 2b zeigen das Automationssystem 10 in einem Zustand zu Anfang eines automatisierten Beschickungsvorgangs. Für das automatisierte Beschicken befindet sich die Automationszelle 12 in einem automatischen Beschickungsmodus. Das fahrerlose Transportsystem 14 hat den vorzunehmenden Beschickungsvorgang bei der Automationszelle 12 angemeldet. Wenn das fahrerlose Transportsystem 14 mit dem Stapel 16 unmittelbar (z.B. bis auf weniger als acht Zentimeter) vor die Beschickungsöffnung 26 gefahren ist, wird das Sicherungssystem 30 in einen Teilüberwachungsbetrieb umgeschaltet, der ein Einführen des Stapels 16 durch die Beschickungsöffnung 26 auf den ersten Stapelplatz 34 erlaubt.

Die Automationszelle 12 und das fahrerlose Transportsystem 14 können jeweils nicht näher dargestellte redundante Kommunikationseinrichtungen aufweisen. Mittels der redundanten Kommunikationseinrichtungen kann eine sichere Kommunikation zwischen der Automationszelle 12 und dem fahrerlosen Transportsystem 10 eingerichtet sein. Die (sichere) Kommunikation umfasst insbesondere das Anmelden eines Beschickungsvorgangs von dem fahrerlosen Transportsystem 14 bei der Automationszelle 12 und das Senden eines Anhaltebefehls von der Automationszelle 12 an das fahrerlose Transportsystem 14, falls das Sicherungssystem 30 ausgelöst wird.

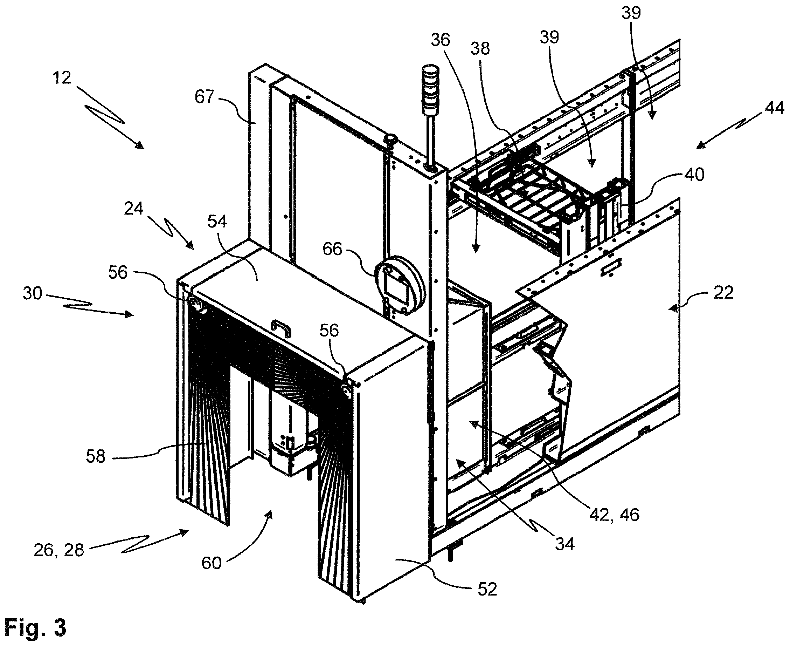

In **Figur 3** ist die Automationszelle 12 mit dem im Teilüberwachungsbetrieb befindlichen Sicherungssystem 30 dargestellt. Im Teilüberwachungsbetrieb überwacht das Sicherungssystem 30 nur einen, hier äußeren, Teilbereich **58** des Eingriffsbereichs 28. Ein, hier innerer, Einführbereich **60** ist von der Überwachung ausgenommen. Eine Unterscheidung zwischen einem Eingriff in den überwachten Teilbereich 58 bzw. den nicht überwachten Einführbereich 60 kann erfolgen, indem das Sicherungssystem 30 einen Ort eines Eingriffs in den Eingriffsbereich 28 bestimmt, wobei ein Eingriff in den überwachten Teilbereich 58 zu einem Auslösen des Sicherungssystems 30 führt, wohingegen ein Eingriff in den nicht überwachten Einführbereich 60 ohne weitere Reaktion toleriert wird. Eine Größe, insbesondere eine Höhe und/oder Breite, des überwachten Teilbereichs 58 bzw. des nichtüberwachten Einführbereichs 60 kann auf die Größe des Stapels 16 bzw. des fahrerlosen Transportsystems 14 abgestimmt sein.

In Figur 3 ist ferner zu erkennen, dass sich die Haube 46 über dem ersten Stapelplatz 34 befindet, sodass die Abtrenneinrichtung 42 den ersten Stapelplatz 34 abtrennt. Aufgrund der Überwachung der Beschickungsöffnung 26 durch das Sicherungssystem 30 ist dieses Abtrennen im automatischen Beschickungsmodus jedoch nicht zwingend erforderlich.

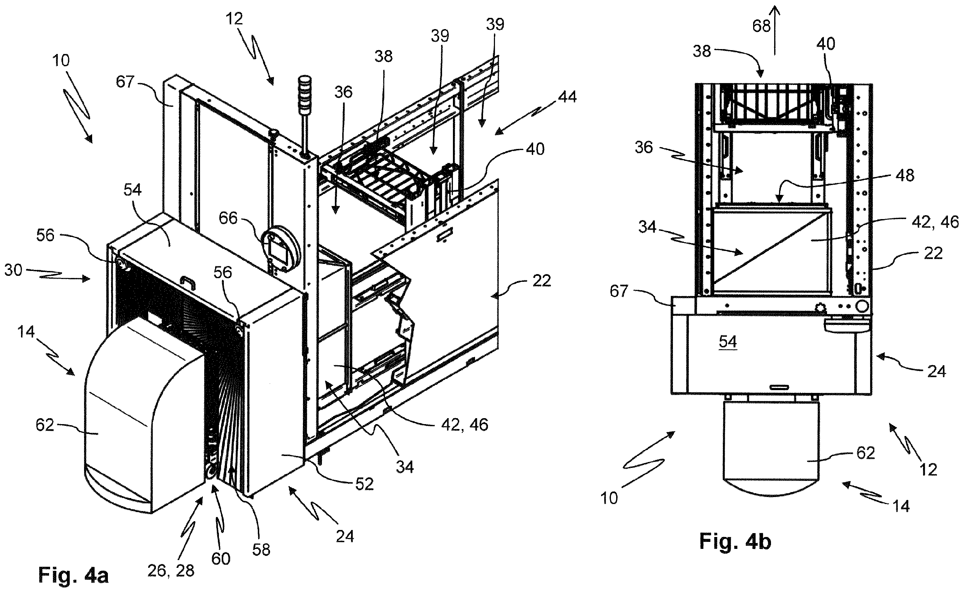

Die **Figuren 4a** und **4b** zeigen das Automationssystem 10 von Figur 1 während des Einführens des Stapels 16 durch die Beschickungsöffnung 26. In der dargestellten Konfiguration ist der Stapel 16 von dem fahrerlosen Transportsystem 14 nahezu vollständig durch die Beschickungsöffnung 26 verbracht worden. Das Sicherungssystem 30 hat daraufhin die Größe des überwachten Teilbereichs 58 und mithin die Größe des Einführbereichs 60 so angepasst, dass ein Gehäuse **62** des fahrerlosen Transportsystems 14 die Beschickungsöffnung 26 passieren kann, ohne dass Sicherungssystem 30 auszulösen.

Im weiteren Verlauf des Beschickungsvorgangs wird das fahrerlose Transportsystem 14 den Stapel 16 bis auf den ersten Stapelplatz 34 verbringen und sodann wieder von der Automationszelle 12 wegfahren. Nachdem das fahrerlose Transportsystem 14 die Beschickungsöffnung 26 verlassen hat, wird das Sicherungssystem 30 wieder in den Vollüberwachungsbetrieb geschaltet.

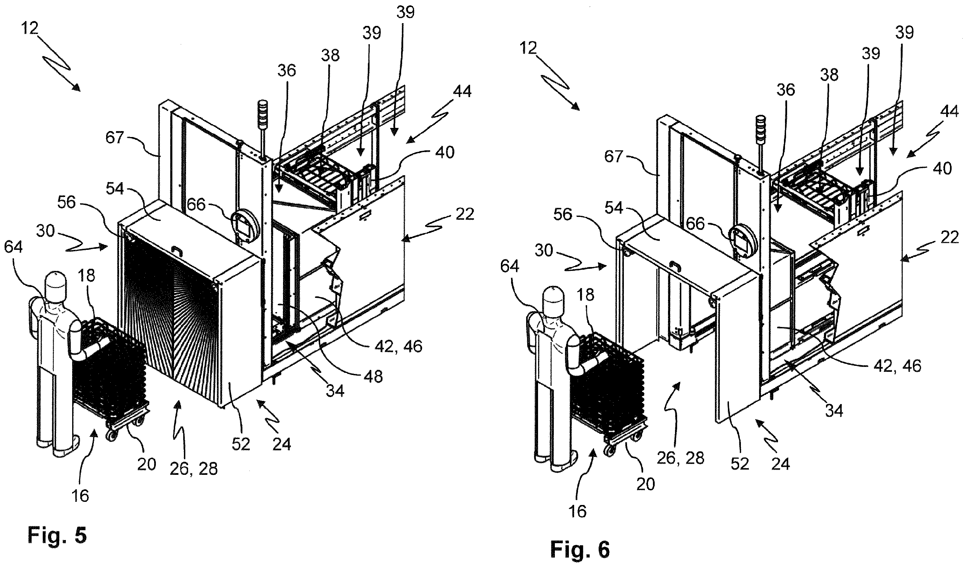

**Figur 5** zeigt die Automationszelle 12 von Figur 1 in einem Zustand zu Anfang eines manuellen Beschickungsvorgangs. Für das manuelle Beschicken wird die Automationszelle 12 in einen manuellen Beschickungsmodus geschaltet. Dies kann erfolgen, indem ein Bediener **64** eine entsprechende Eingabe an einem Bedienterminal **66** der Automationszelle 12 vornimmt.

In Figur 5 befindet sich das Sicherungssystem 30 im Vollüberwachungsbetrieb, sodass jeglicher Eingriff in die Beschickungsöffnung 26 erkannt wird und zu einem Anhalten der Automationszelle 12 führt. Die Haube 46 der Abtrenneinrichtung 42 kann sich hierbei über dem zweiten Stapelplatz 36 befinden, sodass der erste Stapelplatz 34 freigegeben ist.

Nachdem der Bediener 64 den manuellen Beschickungsvorgang angemeldet hat, wird zunächst der erste Stapelplatz 34 mittels der Abtrenneinrichtung 42 nach innen abgetrennt. Hierzu wird die Haube 46 über den ersten Stapelplatz 34 verfahren. Sodann wird das Sicherungssystem 30 deaktiviert. Dieser Zustand ist in **Figur 6** gezeigt.

Da der Vorbau 24 von einer, hier vertikalen, Wand **67** der Einhausung 22 vorsteht, bewirkt er einerseits dass die Beschickungsöffnung 26 von dem ersten Stapelplatz 34 beabstandet ist, sodass im Falle eines Eingriffs (bei aktiviertem Sicherungssystem 30) mehr Zeit verbleibt, um den Betrieb der Automationszelle 12 zu unterbrechen. Andererseits behindert insbesondere das Dachsegment 54 den Bediener 64 beim Beschicken des ersten Stapelplatzes 34.

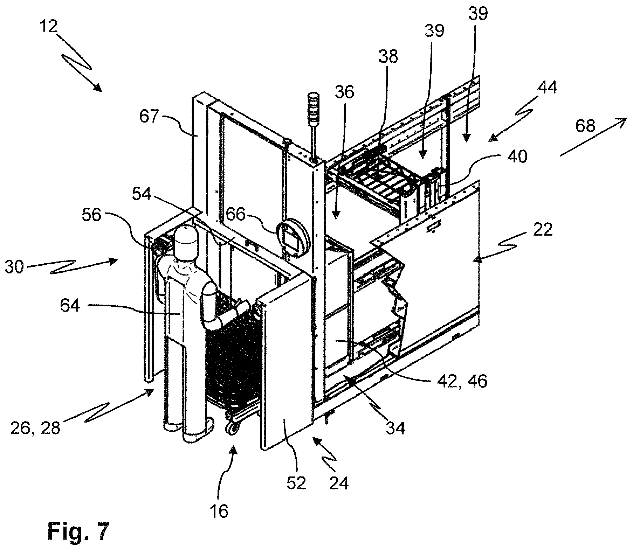

Um das Beschicken zu vereinfachen, kann der Bediener 64 nach dem Deaktivieren des Sicherungssystems 30 das Dachsegment 54 des Vorbaus 24 aus der Abdeckstellung, vergleiche Figuren 5 und 6, in eine Öffnungsstellung, siehe **Figur 7****,** verbringen. Das Dachsegment 54 kann hierzu nach innen (über den ersten Stapelplatz 34) verschoben werden. Das Sicherungssystem 30 kann die Position des Dachsegments 54 überwachen, sodass bei aktiviertem Sicherungssystem 30 ein Versuch, das Dachsegment 54 zu öffnen, zu einem Auslösen des Sicherungssystems 30 und folglich einem Unterbrechen des Betriebs der Automationszelle 12 führt. Das Öffnen des Dachsegments 54 erleichtert es dem Bediener 64, den Stapel 16 auf den ersten Stapelplatz 34 zu verbringen. Um den Stapel 16 mit dem Transportwagen 20 auf den ersten Stapelplatz 34 zu schieben, kann der Bediener 64 bei geöffnetem Dachsegment 54 durch die Beschickungsöffnung 26 bis unmittelbar vor den ersten Stapelplatz 34 treten. Der Bediener 64 muss sich hierzu weder bücken noch durch die Beschickungsöffnung 26 strecken.

Die vorstehend unter Bezug auf die Figuren 2a bis 7 beschriebenen manuellen bzw. automatisierten Beschickungsvorgänge mit Einführen eines Stapels 16 von Teileträgern 18 durch die Beschickungsöffnung 26 auf den ersten Stapelplatz 34 sind unter Vorname entsprechender Anpassungen auch zum Entnehmen eines Stapels 16 von Teileträgern 18 von dem ersten Stapelplatz 34 durchführbar.

Bei der Automationszelle 12 sind die Stapelplätze 34, 36, 38, 39 in einer Längsrichtung **68,** vergleiche auch Figur 1, hintereinanderliegend angeordnet. Die Stapelplätze 34, 36, 38, 39 liegen mit anderen Worten auf einer geraden Linie. Das Beschicken, d. h. das Einführen und Entnehmen eines Stapels 16 von Teileträgern 18 durch die Beschickungsöffnung 26, erfolgt entlang der Längsrichtung 68. Die Beschickungsöffnung 26 kann hierzu quer zu der Längsrichtung 68 verlaufend angeordnet sein.

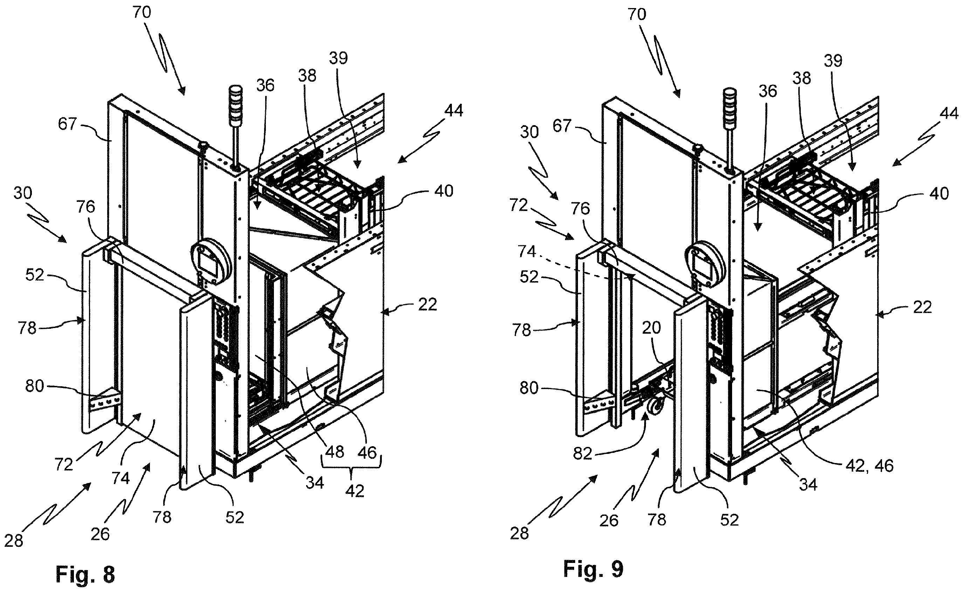

**Figur 8** zeigt eine Automationszelle **70.** Die Automationszelle 70 entspricht, von einem Sicherungssystem 30 abgesehen, in ihrem Aufbau und ihrer Funktionsweise der Automationszelle 12 von Figur 1. Insofern sei auf die obige Beschreibung verwiesen.

Das Sicherungssystem 30 der Automationszelle 70 weist eine Verschlusseinrichtung **72** für eine Beschickungsöffnung 26 auf. Die Verschlusseinrichtung 72 ist hier mit einem Rolltor **74** ausgebildet, das in einen oberseitig an der Beschickungsöffnung angeordneten Kasten **76** hinein aufrollbar ist. In Figur 8 befindet sich die Verschlusseinrichtung 72 in einer geschlossenen Stellung; das Rolltor 74 verschließt die Beschickungsöffnung 26. Die geschlossene Stellung der Verschlusseinrichtung 72 ist in einem Vollüberwachungsbetrieb des Sicherungssystems 30 eingerichtet. Im Vollüberwachungsbetrieb führt ein Versuch, die Verschlusseinrichtung 72 zu öffnen, zu einem Unterbrechen des Betriebs der Automationszelle 70 und gegebenenfalls zu einem Anhalten eines fahrerlosen Transportsystems 14 eines Automationssystems 10 mit der Automationszelle 70.

Das Sicherungssystem 30 weist ferner zwei Berührschutzleisten **78** auf. Die Berührschutzleisten 78 sind hier seitlich neben der Beschickungsöffnung 26 angeordnet. Die Berührschutzleisten 78 werden durch Berührungen ausgelöst. Bei Auslösen der Berührschutzleisten 78 unterbricht das Sicherungssystem 30 einen Betrieb der Automationszelle 70 und hält gegebenenfalls das fahrerlose Transportsystem 14 an. Dadurch kann ein Einklemmen eines Bedieners 64 (vergleiche Figuren 5 bis 7) zwischen der Automationszelle 70 und dem fahrerlosen Transportsystem 14 vermieden werden.

Die Berührschutzleisten 78 können in Seitenwangen 52 integriert sein, welche von einer, hier vertikal verlaufenden, Wand 67 einer Einhausung 22 der Automationszelle 70 vorstehen. An den Seitenwangen 52 können Führungselemente **80** angeordnet sein, um das Einführen eines Stapels 16 von Teileträgern 18 in die Beschickungsöffnung 26 zu vereinfachen.

Ein von dem Sicherungssystem 30 überwachbarer - und im Vollüberwachungsbetrieb überwachter - Eingriffsbereich 28 umfasst die Beschickungsöffnung 26 und den Bereich der Berührschutzleisten 78. In einem Teilüberwachungsbetrieb kann ein von dem Sicherungssystem 30 überwachter Teilbereich den Bereich der Berührschutzleisten 78 und - bei teilweise geschlossener Verschlusseinrichtung 72 - den abgedeckten Teil der Beschickungsöffnung 26 umfassen.

**Figur 9** zeigt die Automationszelle 70 in einem Teilüberwachungsbetrieb des Sicherungssystems 30. Im Teilüberwachungsbetrieb kann die Automationszelle 70 automatisiert beschickt werden. Hier ist die Verschlusseinrichtung 72 für den Teilüberwachungsbetrieb geöffnet. Das Rolltor 74 (vgl. Figur 8) ist nach oben gefahren und in dem Kasten 76 aufgenommen. Der erste Stapelplatz 34 ist dadurch von außen zugänglich. Die Berührschutzleisten 78 sind auch im Teilüberwachungsbetrieb aktiv und halten bei Berührung die Automationszelle 70 sowie gegebenenfalls das fahrerlose Transportsystem 14 an.

Für ein manuelles Beschicken können die Berührschutzleisten 78 des Sicherungssystems 30 deaktiviert werden. Dadurch wird vermieden, dass (harmlose) Berührungen zu einer Unterbrechung des Betriebs der Automationszelle 70 führen.

In einem manuellen Beschickungsmodus der Automationszelle 70 kann die Verschlusseinrichtung 72 erst geöffnet werden, wenn der erste Stapelplatz 34 mittels einer Abtrenneinrichtung 42 vom übrigen Innenraum 44 der Einhausung 22 abgetrennt worden ist. Hierzu kann (wie oben beschrieben) eine Haube 46 über den ersten Stapelplatz 34 verfahren werden. In einem automatischen Beschickungsmodus der Automationszelle 70 kann ein Öffnen der Verschlusseinrichtung 72 auch bei freigegebenem erstem Stapelplatz 34 erfolgen, wenn sich das fahrerlose Transportsystem 14 unmittelbar vor der Beschickungsöffnung 26 befindet.

Die Automationszelle 70 kann eine Ausrichteinrichtung **82** an dem ersten Stapelplatz 34 aufweisen. Mittels der Ausrichteinrichtung 82 kann ein Stapel 16 von Teileträgern 18 nach dem Verbringen auf den ersten Stapelplatz 34 präzise ausgerichtet werden. Dies vereinfacht das Umsetzen von Teileträgern 18 mittels einer Umsetzeinrichtung 40. Die Ausrichteinrichtung 82 kann zum Ausrichten auf einen Transportwagen 20 des Stapels 16 einwirken. Die Ausrichteinrichtung 82 kann auch bei der Automationszelle 12 von Figur 1 vorgesehen sein.

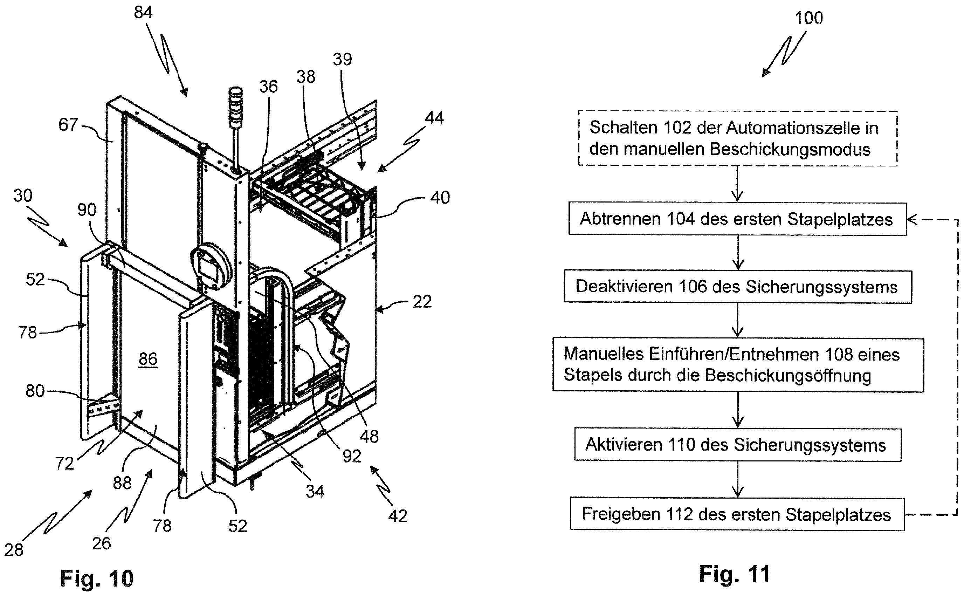

**Figur 10** zeigt eine Automationszelle **84.** Bei der Automationszelle 84 weisen eine Verschlusseinrichtung 72 und eine Abtrenneinrichtung 42 ein gemeinsames Trennelement **86** auf. Das Trennelement 86 ist wahlweise zum Verschließen einer Beschickungsöffnung 26 oder zum Abtrennen eines ersten Stapelplatzes 34 anordenbar. Das Trennelement 86 ist hier Teil eines Sektionaltores **88.** Ein Antrieb **90** des Sektionaltores 88 kann oberseitig der Beschickungsöffnung 26 angeordnet sein. In Figur 10 ist die Verschlusseinrichtung 72 geschlossen dargestellt. Das Trennelement 86 verschließt die Beschickungsöffnung 26. Beim Öffnen der Verschlusseinrichtung 72 wird das Trennelement 86 mittels einer Schienenanordnung **92** über und hinter den ersten Stapelplatz 34 geführt. Seitlich des ersten Stapelplatzes 34 können nicht näher dargestellte, insbesondere feststehende, Trennwände der Abtrenneinrichtung 42 angeordnet sein. Zwischen dem ersten Stapelplatz 34 und dem zweiten Stapelplatz 36 kann eine, insbesondere feststehende, Schottwand 48 der Abtrenneinrichtung 42 angeordnet sein.

Im Übrigen entspricht die Automationszelle 84 in Aufbau und Funktion der Automationszelle 70 von Figur 8. Insofern sei auf die obige Beschreibung verwiesen.

**Figur 11** zeigt ein schematisches Ablaufdiagramm eines Verfahrens **100** zum manuellen Beschicken einer Automationszelle. Das Verfahren wird hier beispielhaft anhand der Automationszelle 12 von Figur 1 beschrieben. Das Verfahren 100 kann auch mit der Automationszelle 70 von Figur 8 oder der Automationszelle 84 von Figur 10 durchgeführt werden.

Sofern sich die Automationszelle 12 zu Beginn des Verfahrens 100 in dem automatischen Beschickungsmodus befindet, wird die Automationszelle 12 zunächst in einem Schritt **102** in den manuellen Beschickungsmodus geschaltet.

In einem Schritt **104** wird der erste Stapelplatz 34 mittels der Abtrenneinrichtung 42 abgetrennt. Sodann wird das Sicherungssystem 30 in einem Schritt **106** deaktiviert. Das Dachsegment 54 des Vorbaus 24 kann daraufhin geöffnet werden. Nun kann ein Bediener 64 in einem Schritt **108** den ersten Stapelplatz 34 durch die Beschickungsöffnung 26 beschicken. Der Bediener 64 kann zunächst einen ersten Stapel 16 von Teileträgern 18 mit bearbeiteten Teilen durch die Beschickungsöffnung 26 von dem ersten Stapelplatz 34 entnehmen und sodann einen zweiten Stapel 16 von Teileträgern 18 mit zu bearbeitenden Teilen durch die Beschickungsöffnung 26 zu dem ersten Stapelplatz 34 verbringen.

Daraufhin wird das Sicherungssystem 30 in einem Schritt **110** wieder aktiviert. Zuvor wurde ggf. das Dachsegment 54 wieder geschlossen. Sodann wird in einem Schritt **112** der erste Stapelplatz 34 von der Abtrenneinrichtung 42 freigegeben.

Anschließend können weitere manuelle Beschickungsvorgänge durchgeführt werden, vergleiche gestrichelter Pfeil in Figur 11. Es sei angemerkt, dass die in einem nachfolgenden Verfahrensdurchlauf von dem ersten Stapelplatz 34 entnommenen Teileträger 18 typischerweise nicht diejenigen Teileträger 18 sind, welche im unmittelbar vorhergehenden Beschickungsvorgang auf den ersten Stapelplatz 34 verbracht wurden, sondern dass durch Umstapeln mittels der Umsetzeinrichtung 40 andere Teileträger 18 auf den ersten Stapelplatz 34 gelangt sind. Ein Transportwagen 20 auf dem ersten Stapelplatz 34 wird grundsätzlich nicht umgestapelt, sondern nach dem Einführen beim nächsten Beschickungsvorgang wieder entnommen.

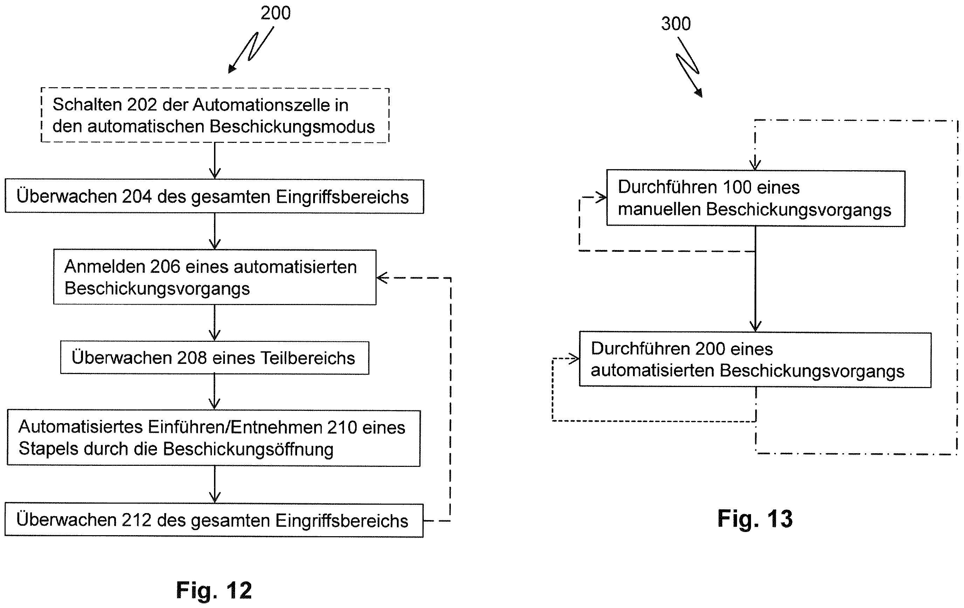

**Figur 12** zeigt ein schematisches Ablaufdiagramm eines Verfahrens **200** zum automatisierten Beschicken eines Automationssystems 10. Das Verfahren wird hier beispielhaft anhand des Automationssystems 10 mit der Automationszelle 12 von Figur 1 beschrieben. Das Verfahren 200 kann auch mit einem Automationssystem mit der Automationszelle 70 von Figur 8 oder mit der Automationszelle 84 von Figur 10 durchgeführt werden.

Sofern sich die Automationszelle 12 zu Beginn des Verfahrens 200 in dem manuellen Beschickungsmodus befindet, wird die Automationszelle 12 zunächst in einem Schritt **202** in den automatischen Beschickungsmodus geschaltet.

Zunächst wird in dem Vollüberwachungsbetrieb des Sicherungssystems 30 in einem Schritt **204** der gesamte Eingriffsbereich 28 an der Beschickungsöffnung 26 überwacht. Während des Vollüberwachungsbetriebs wird in einem Schritt **206** ein automatisierter Beschickungsvorgang bei der Automationszelle 12 angemeldet, insbesondere von dem fahrerlosen Transportsystem 14.

Wenn sich das fahrerlose Transportsystem 14 unmittelbar vor der Beschickungsöffnung 26 befindet, wird das Sicherungssystem 30 in den Teilüberwachungsbetrieb umgeschaltet, sodass in einem Schritt **208** ein Teilbereich 58 des Eingriffsbereichs 28 überwacht wird. Während der Überwachung des Teilbereichs 58 in dem Teilüberwachungsbetrieb wird der erste Stapelplatz 34 in einem Schritt **210** automatisiert beschickt. Zunächst kann mittels des fahrerlosen Transportsystems 14 ein erster Stapel 16 von Teileträgern 18 von dem ersten Stapelplatz 34 durch die Beschickungsöffnung 26 entnommen werden. Sodann kann ein zweiter Stapel 16 von Teileträgern 18 mittels desselben oder eines anderen fahrerlosen Transportsystems 14 durch die Beschickungsöffnung 26 auf den ersten Stapelplatz 34verbracht werden. Für das Einführen bzw. Entnehmen der Stapel 16 kann eine Größe des überwachten Teilbereichs 58 auf den jeweiligen Stapel 16 angepasst werden. Auch während des Durchführens des Stapels 16 durch die Beschickungsöffnung 26 kann die Größe des überwachten Teilbereichs 58 verändert werden, beispielsweise wenn ein Gehäuse 62 des fahrerlosen Transportsystems 14 die Beschickungsöffnung 26 passieren soll.

Abschließend wird das Sicherungssystem 30 in einem Schritt **212** wieder in den Vollüberwachungsbetrieb geschaltet sodass der gesamte Eingriffsbereich 28 überwacht wird. Anschließend können weitere automatisierte Beschickungsvorgänge durchgeführt werden, vergleiche gestrichelter Pfeil in Figur 12.

**Figur 13** zeigt ein schematisches Ablaufdiagramm eines Betriebsverfahrens **300** für ein Automationssystem 10. Das Automationssystem 10 kann beispielsweise mit der Automationszelle 12 von Figur 1, der Automationszelle Zelle 70 von Figur 8 oder der Automationszelle 84 von Figur 10 ausgebildet sein.

Zunächst werden ein Durchlauf oder mehrere Durchläufe des manuellen Beschickungsverfahrens 100 gemäß Figur 11 durchgeführt. Sodann werden ein Durchlauf oder mehrere Durchläufe des automatisierten Beschickungsverfahrens 200 gemäß Figur 12 durchgeführt. Anschließend können wieder Durchläufe des manuellen Beschickungsverfahrens 100 durchgeführt werden, und so fort.

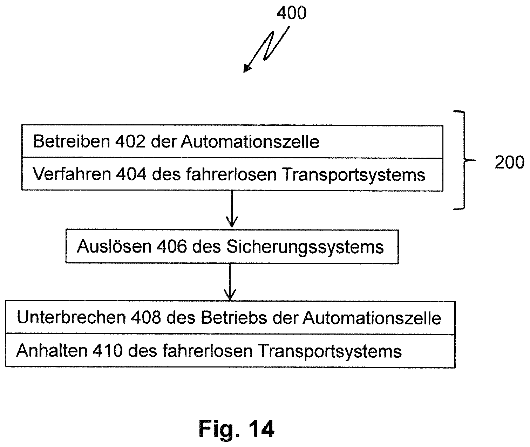

**Figur 14** zeigt ein schematisches Ablaufdiagramm eines Betriebsverfahrens 400 für ein Automationssystem 10. Das Automationssystem 10 kann beispielsweise mit der Automationszelle 12 von Figur 1, der Automationszelle Zelle 70 von Figur 8 oder der Automationszelle 84 von Figur 10 ausgebildet sein.

Im Rahmen eines automatisierten Beschickungsverfahrens 200, vergleiche Figur 12, wird die Automationszelle 12 in einem Schritt **402** betrieben und es wird das fahrerlose Transportsystem 14 in einem Schritt **404** selbsttätig in einer Umgebung der Automationszelle 12 verfahren. Währenddessen erfolgt eine Überwachung zumindest eines Teilbereichs 58 oder des gesamten Eingriffsbereichs 28 an der Beschickungsöffnung 26 durch das Sicherungssystem 30. In einem Schritt **406** wird das Sicherungssystem 30 ausgelöst, indem ein Eingriff in den Eingriffsbereich 28 bzw. den überwachten Teilbereich 58 erfolgt. Daraufhin wird in einem Schritt **408** der Betrieb der Automationszelle 12 durch das Sicherungssystem 30 unterbrochen und es wird in einem Schritt 410 das fahrerlose Transportsystem 14 auf Befehl des Sicherungssystems 30 hin angehalten.

### Bezugszeichenliste

Automationssystem **10**
Automationszelle **12, 70, 84**
fahrerloses Transportsystem **14**
Stapel **16**
Teileträger **18**
Transportwagen **20**
Einhausung **22**
Vorbau **24**
Beschickungsöffnung **26**
Eingriffsbereich **28**
Sicherungssystem **30**
Schaltschrank **32**
erster Stapelplatz **34**
zweiter Stapelplatz **36**
dritter Stapelplatz **38**
weitere Stapelplätze **39**
Umsetzeinrichtung **40**
Abtrenneinrichtung **42**
Innenraum **44**
Haube **46**
Schottwand **48**
Hubeinrichtung **50**
Seitenwangen **52**
Dachsegment **54**
Laserscanner **56**
Teilbereich **58**
Einführbereich **60**
Gehäuse **62**
Bediener **64**
Bedienterminal **66**
Wand **67**
Längsrichtung **68**
Verschlusseinrichtung **72**
Rolltor **74**
Kasten **76**
Berührschutzleisten **78**
Führungselemente **80**
Ausrichteinrichtung **82**
Trennelement **86**
Sektionaltor **88**
Antrieb **90**
Schienenanordnung **92**
Verfahren **100** zum manuellen Beschicken
Schalten **102** in den manuellen Beschickungsmodus
Abtrennen **104** des ersten Stapelplatzes 34
Deaktivieren **106** des Sicherungssystems 30
Manuelles Einführen und/oder Entnehmen **108** eines Stapels 16
Aktivieren **110** des Sicherungssystems 30
Freigeben **112** des ersten Stapelplatzes 34
Verfahren **200** zum automatisierten Beschicken
Schalten **202** in den automatischen Beschickungsmodus
Überwachen **204** des gesamten Eingriffsbereichs 28
Anmelden **206** eines automatisierten Beschickungsvorgangs
Überwachen **208** eines Teilbereichs 58
Automatisiertes Einführen und/oder Entnehmen **210** eines Stapels 16
Überwachen **212** des gesamten Eingriffsbereichs 28
Betriebsverfahren **300** mit manueller und automatisierter Beschickung
Betriebsverfahren **400** mit Auslösen des Sicherungssystems 30
Betreiben **402** der Automationszelle 12, 70, 84
Verfahren **404** des fahrerlosen Transportsystems 14
Auslösen **406** des Sicherungssystems 30
Unterbrechen **408** des Betriebs der Automationszelle 12, 70, 84
Anhalten **410** des fahrerlosen Transportsystems 14

## Patentansprüche

1. Automationszelle (12, 70, 84) zur Handhabung von Teileträgern (18), aufweisend
- eine Einhausung (22), innerhalb der ein erster Stapelplatz (34), ein zweiter Stapelplatz (36) und ein dritter Stapelplatz (38) für Teileträger (18) angeordnet sind, wobei die Einhausung (22) eine Beschickungsöffnung (26) für den ersten Stapelplatz (34) aufweist,
- eine Umsetzeinrichtung (40) zum Umsetzen von Teileträgern (18) zwischen den Stapelplätzen (34, 36, 38), und
- eine Abtrenneinrichtung (42), um wahlweise den ersten Stapelplatz (34) nach innen abzutrennen oder freizugeben,
**dadurch gekennzeichnet,**
**dass** die Automationszelle (12, 70, 84) ein Sicherungssystem (30) für einen Eingriffsbereich (28) an der Beschickungsöffnung (26) aufweist, das dazu eingerichtet ist,
- in einem Vollüberwachungsbetrieb den gesamten Eingriffsbereich (28) zu überwachen,
- in einem Teilüberwachungsbetrieb nur einen Teilbereich (58), insbesondere einen äußeren Teilbereich, des Eingriffsbereichs (28) zu überwachen, und
- einen Betrieb der Automationszelle (12, 70, 84) zu unterbrechen, wenn das Sicherungssystem (30) einen Eingriff erkennt,
und **dass** die Automationszelle (12, 70, 84) dazu eingerichtet ist,
- in einem automatischen Beschickungsmodus das Sicherungssystem (30) in den Teilüberwachungsbetrieb zu schalten, wenn zuvor ein automatisierter Beschickungsvorgang angemeldet wurde, und nach Abschluss des automatisierten Beschickungsvorgangs, das Sicherungssystem (30) in den Vollüberwachungsbetrieb zu schalten, und
- in einem manuellen Beschickungsmodus das Sicherungssystem (30) zu deaktivieren, wenn die Abtrenneinrichtung (42) den ersten Stapelplatz (34) abtrennt, und das Sicherungssystem (30) in den Vollüberwachungsbetrieb zu schalten, bevor die Abtrenneinrichtung (42) den ersten Stapelplatz (34) freigibt.

2. Automationszelle (12, 70, 84) nach Anspruch 1, **dadurch gekennzeichnet,**
**dass** die Automationszelle (12, 70, 84), dazu eingerichtet ist, das Sicherungssystem (30) nur dann in den Teilüberwachungsbetrieb zu schalten, wenn sich ein Stapel (16) von Teileträgern (18) unmittelbar vor der Beschickungsöffnung (26) befindet.

3. Automationszelle (12) nach einem der vorhergehenden Ansprüche,
**dadurch gekennzeichnet, dass** das Sicherungssystem (30) für eine berührungslose, insbesondere optische, Überwachung ausgebildet ist.

4. Automationszelle (70, 84) nach einem der vorhergehenden Ansprüche,
**dadurch gekennzeichnet, dass** das Sicherungssystem (30) für ein Erkennen von Berührungen ausgebildet ist, insbesondere wobei das Sicherungssystem (30) wenigstens eine Berührschutzleiste (78) aufweist.

5. Automationszelle (70, 84) nach einem der vorhergehenden Ansprüche,
**dadurch gekennzeichnet, dass** das Sicherungssystem (30) eine Verschlusseinrichtung (72) für die Beschickungsöffnung (26) aufweist.

6. Automationszelle (84) nach Anspruch 5, **dadurch gekennzeichnet, dass** die Verschlusseinrichtung (72) und die Abtrenneinrichtung (42) ein gemeinsames Trennelement (86) aufweisen, welches wahlweise zum Verschließen der Beschickungsöffnung (26) oder zum Abtrennen des ersten Stapelplatzes (34) anordenbar ist.

7. Automationszelle (12) nach einem der vorhergehenden Ansprüche,
**dadurch gekennzeichnet, dass** die Beschickungsöffnung (26) an einem Vorbau (24) der Einhausung (22) ausgebildet ist.

8. Automationszelle (12) nach Anspruch 7, **dadurch gekennzeichnet, dass** der Vorbau (24) ein Dachsegment (54) aufweist, welches in eine Abdeckstellung und in eine Öffnungsstellung verbringbar ist.

9. Automationszelle (12, 70, 84) nach einem der vorhergehenden Ansprüche, **dadurch gekennzeichnet, dass** an dem ersten Stapelplatz (34) eine Ausrichteinrichtung (82) zum Ausrichten eines Stapels (16) von Teileträgern (18) vorgesehen ist.

10. Automationszelle (12, 70, 84) nach einem der vorhergehenden Ansprüche, **dadurch gekennzeichnet, dass** die Stapelplätze (34, 36, 38) in einer Längsrichtung (68) hintereinanderliegend angeordnet sind, und dass die Beschickungsöffnung (26) für eine Beschickung in der Längsrichtung (68) ausgerichtet ist.

11. Automationssystem (10) umfassend eine Automationszelle (12, 70, 84) nach einem der vorhergehenden Ansprüche und ein fahrerloses Transportsystem (14) zum Transportieren eines Stapels (16) von Teileträgern (18).

12. Automationssystem (10) nach Anspruch 11, **dadurch gekennzeichnet, dass** das Sicherungssystem (30) dazu eingerichtet ist, das fahrerlose Transportsystem (14) anzuhalten, wenn das Sicherungssystem (30) einen Eingriff an der Beschickungsöffnung (26) erkennt.

13. Automationssystem (10) nach Anspruch 11 oder 12, **dadurch gekennzeichnet, dass** das fahrerlose Transportsystem (14) dazu eingerichtet ist, einen Beschickungsvorgang bei der Automationszelle (12, 70, 84) anzumelden.

14. Automationssystem (10) nach Anspruch 13, **dadurch gekennzeichnet, dass** das fahrerlose Transportsystem (14) dazu eingerichtet ist, der Automationszelle (12, 70, 84) eine Größe eines durch die Beschickungsöffnung (26) einzuführenden Stapels (16) von Teileträgern (18) mitzuteilen, und dass das Sicherungssystem (30) dazu eingerichtet ist, eine Größe des im Teilüberwachungsbetrieb überwachten Teilbereichs (58) des Eingriffsbereichs (28) an die mitgeteilte Größe des Stapels (16) von Teileträgern (18) anzupassen.

15. Automationssystem (10) nach einem der Ansprüche 11 bis 14, **dadurch gekennzeichnet, dass** das Automationssystem (10) für eine sichere Kommunikation zwischen der Automationszelle (12, 70, 84) und dem fahrerlosen Transportsystem (14) eingerichtet ist.

16. Verfahren (100) zum manuellen Beschicken einer Automationszelle (12, 70, 84) nach einem der Ansprüche 1 bis 10, mit den Schritten
a) Abtrennen (104) des ersten Stapelplatzes (34) nach innen,
b) Deaktivieren (106) des Sicherungssystems (30),
c) Einführen und/oder Entnehmen (108) eines Stapels (16) von Teileträgern (18) durch die Beschickungsöffnung (26),
d) Aktivieren (110) des Sicherungssystems (30),
e) Freigeben (112) des ersten Stapelplatzes (34).

17. Verfahren (200) zum automatisierten Beschicken der Automationszelle (12, 70, 84) eines Automationssystems (10) nach einem der Ansprüche 11 bis 15, mit den Schritten
A) Überwachen (204) des gesamten Eingriffsbereichs (28) an der Beschickungsöffnung (26),
B) Anmelden (206) eines automatisierten Beschickungsvorgangs bei der Automationszelle (12, 70, 84),
C) Überwachen (208) eines Teilbereichs (58), insbesondere eines äußeren Teilbereichs, des Eingriffsbereichs (28),
D) Einführen und/oder Entnehmen (210) eines Stapels (16) von Teileträgern (18) durch die Beschickungsöffnung (26) mittels des fahrerlosen Transportsystems (14),
E) Überwachen (212) des gesamten Eingriffsbereichs (28).

18. Betriebsverfahren (300) für ein Automationssystem (10) nach einem der Ansprüche 11 bis 15, **dadurch gekennzeichnet, dass** wenigstens ein Durchlauf eines Verfahrens (100) gemäß Anspruch 16 und wenigstens ein Durchlauf eines Verfahrens (200) gemäß Anspruch 17 durchgeführt werden.

19. Betriebsverfahren (400) für ein Automationssystem (10) nach Anspruch 12, mit den Schritten
K) Betreiben (402) der Automationszelle (12, 70, 84) und selbsttätiges Verfahren (404) des fahrerlosen Transportsystems (14) in einer Umgebung der Automationszelle (12, 70, 84), insbesondere Einführen und/oder Entnehmen eines Stapels (16) von Teileträgern (18) durch die Beschickungsöffnung (26) mittels des fahrerlosen Transportsystems (14),
L) Auslösen (406) des Sicherungssystems (30),
M) Unterbrechen (408) des Betriebs der Automationszelle (12, 70, 84) und Anhalten (410) des fahrerlosen Transportsystems (14) durch das Sicherungssystem (30).

## Claims

1. Automation cell (12, 70, 84) for handling component carriers (18), having
- an enclosure (22) within which a first stacking space (34), a second stacking space (36) and a third stacking space (38) for component carriers (18) are arranged, the enclosure (22) having a loading opening (26) for the first stacking space (34),
- a transfer device (40) for transferring component carriers (18) between the stacking spaces (34, 36, 38), and
- a separating device (42) in order to selectively separate or release the first stacking space (34) inwardly,
**characterized in that**
the automation cell (12, 70, 84) has a safety system (30) for an intervention area (28) at the loading opening (26), which is set up
- to monitor the entire intervention area (28) in full monitoring mode,
- to monitor only a sub-area (58), in particular an outer sub-area, of the intervention area (28) in partial monitoring mode, and
- to interrupt the operation of the automation cell (12, 70, 84) if the safety system (30) detects an intervention,
and **in that** the automation cell (12, 70, 84) is set up
- to switch the safety system (30) to partial monitoring mode in automatic loading mode if an automated loading process has been registered beforehand, and to switch the safety system to full monitoring mode after completion of the automated loading process, and
- to deactivate the safety system (30) in manual loading mode when the separating device (42) separates the first stacking space (34) and to switch the safety system (30) to full monitoring mode before the separating device (42) releases the first stacking space (34).

2. Automation cell (12, 70, 84) according to claim 1, **characterized in that** the automation cell (12, 70, 84) is set up to switch the safety system (30) to partial monitoring mode only when a stack (16) of component carriers (18) is located immediately in front of the loading opening (26).

3. Automation cell (12) according to any of the preceding claims, **characterized in that** the safety system (30) is designed for contactless, in particular optical, monitoring.

4. Automation cell (70, 84) according to any of the preceding claims, **characterized in that** the safety system (30) is designed to detect contact, in particular with the security system (30) having at least one contact protection strip (78).

5. Automation cell (70, 84) according to any of the preceding claims, **characterized in that** the safety system (30) has a closing device (72) for the loading opening (26).

6. Automation cell (84) according to claim 5, **characterized in that** the closing device (72) and the separating device (42) have a common separating element (86), which can be arranged either to close the loading opening (26) or to separate the first stacking space (34).

7. Automation cell (12) according to any of the preceding claims, **characterized in that** the loading opening (26) is formed on a front structure (24) of the enclosure (22).

8. Automation cell (12) according to claim 7, **characterized in that** the front structure (24) has a roof segment (54) which can be brought into a covering position and into an open position.

9. Automation cell (12, 70, 84) according to any of the preceding claims, **characterized in that** an alignment device (82) for aligning a stack (16) of component carriers (18) is provided at the first stacking space (34).

10. Automation cell (12, 70, 84) according to any of the preceding claims, **characterized in that** the stacking spaces (34, 36, 38) are arranged one behind the other in a longitudinal direction (68), and **in that** the loading opening (26) is aligned for loading in the longitudinal direction (68).

11. Automation system (10) comprising an automation cell (12, 70, 84) according to any of the preceding claims and an automated guided vehicle (14) for transporting a stack (16) of component carriers (18).

12. Automation system (10) according to claim 11, **characterized in that** the safety system (30) is set up to stop the automated guided vehicle (14) if the safety system (30) detects an intervention at the loading opening (26).

13. Automation system (10) according to claim 11 or claim 12, **characterized in that** the automated guided vehicle (14) is set up to register a loading process with the automation cell (12, 70, 84).

14. Automation system (10) according to claim 13, **characterized in that** the automated guided vehicle (14) is set up to inform the automation cell (12, 70, 84) of the size of a stack (16) of component carriers (18) to be infed through the loading opening (26), and **in that** the safety system (30) is set up to adapt the size of the sub-area (58) of the intervention area (28) monitored in partial monitoring mode to the reported size of the stack (16) of component carriers (18).

15. Automation system (10) according to any of claims 11 to 14, **characterized in that** the automation system (10) is set up for secure communication between the automation cell (12, 70, 84) and the automated guided vehicle (14).

16. Method (100) for manual loading of an automation cell (12, 70, 84) according to any of claims 1 to 10, comprising the steps of
a) separating (104) the first stacking space (34) inwardly,
b) deactivating (106) the safety system (30),
c) infeeding and/or outfeeding (108) a stack (16) of component carriers (18) through the loading opening (26),
d) activating (110) the safety system (30),
e) releasing (112) the first stacking space (34).

17. Method (200) for automated loading of the automation cell (12, 70, 84) of an automation system (10) according to any of claims 11 to 15, comprising the steps of
A) monitoring (204) the entire intervention area (28) at the loading opening (26),
B) registering (206) an automated loading process with the automation cell (12, 70, 84),
C) monitoring (208) a sub-area (58), in particular an outer sub-area, of the intervention area (28),
D) infeeding and/or outfeeding (210) a stack (16) of component carriers (18) through the loading opening (26) by means of the automated guided vehicle (14),
E) monitoring (212) the entire intervention area (28).

18. Operating method (300) for an automation system (10) according to any of claims 11 to 15, **characterized in that** at least one cycle of a method (100) according to claim 16 and at least one cycle of a method (200) according to claim 17 are carried out.

19. Operating method (400) for an automation system (10) according to claim 12, comprising the steps of
K) operating (402) the automation cell (12, 70, 84) and automatically moving (404) the automated guided vehicle (14) in an environment of the automation cell (12, 70, 84), in particular infeeding and/or outfeeding a stack (16) of component carriers (18) through the loading opening (26) by means of the automated guided vehicle (14),
L) triggering (406) the safety system (30),
M) interrupting (408) the operation of the automation cell (12, 70, 84) and stopping (410) the automated guided vehicle (14) by means of the safety system (30).

## Revendications

1. Cellule d'automatisation (12, 70, 84) pour manipuler des supports de pièces (18), comprenant
- un logement (22) à l'intérieur duquel sont disposés un premier emplacement d'empilement (34), un deuxième emplacement d'empilement (36) et un troisième emplacement d'empilement (38) pour des supports de pièces (18), le logement (22) présentant une ouverture de chargement (26) pour le premier emplacement d'empilement (34),
- un dispositif de transfert (40) pour un transfert de supports de pièces (18) entre les emplacements d'empilement (34, 36, 38), et
- un dispositif d'isolation (42) pour isoler ou libérer sélectivement le premier emplacement d'empilement (34) par rapport à l'intérieur,
**caractérisée en ce que**
la cellule d'automatisation (12, 70, 84) présente un système de sécurité (30) pour une zone d'intervention (28) sur l'ouverture de chargement (26), qui est conçu pour
- surveiller toute la zone d'intervention (28) dans un mode de surveillance totale,
- surveiller uniquement une zone partielle (58) de la zone d'intervention (28), dans un mode de surveillance partielle, en particulier une zone partielle extérieure, et
- interrompre le fonctionnement de la cellule d'automatisation (12, 70, 84) lorsque le système de sécurité (30) reconnaît une intervention,
et **en ce que** la cellule d'automatisation (12, 70, 84) est conçue pour
- dans un mode de chargement automatique, commuter le système de sécurité (30) dans un mode de surveillance partielle lorsqu'un processus de chargement automatisé a été préalablement enregistré, et pour commuter le système de sécurité (30) dans le mode de surveillance totale après la fin du processus de chargement automatique, et
- désactiver le système de sécurité (30) dans un mode de chargement manuel, lorsque le dispositif d'isolation (42) isole le premier emplacement d'empilement (34) et mettre le système de sécurité (30) dans le mode de surveillance totale avant que le dispositif d'isolation (42) ne libère le premier emplacement d'empilement (34).

2. Cellule d'automatisation (12, 70, 84) selon la revendication 1, **caractérisée en ce que** la cellule d'automatisation (12, 70, 84) est conçue pour commuter le système de sécurité (30) dans un mode de surveillance partielle uniquement lorsqu'un empilement (16) des supports de pièces (18) se trouve immédiatement avant l'ouverture de chargement (26).

3. Cellule d'automatisation (12) selon l'une quelconque des revendications précédentes, **caractérisée en ce que** le système de sécurité (30) est conçu pour une surveillance sans contact, en particulier optique.

4. Cellule d'automatisation (70, 84) selon l'une quelconque des revendications précédentes, **caractérisée en ce que** le système de sécurité (30) est conçu pour la détection de contacts, le système de sécurité (30) présentant en particulier au moins une barre de protection contre les contacts (78).

5. Cellule d'automatisation (70, 84) selon l'une quelconque des revendications précédentes, **caractérisée en ce que** le système de sécurité (30) présente un dispositif de fermeture (72) pour l'ouverture de chargement (26).

6. Cellule d'automatisation (84) selon la revendication 5, **caractérisée en ce que** le dispositif de fermeture (72) et le dispositif d'isolation (42) présentent un élément d'isolation commun (86) qui peut être agencé sélectivement pour fermer l'ouverture de chargement (26) ou pour isoler le premier emplacement d'empilement (34).

7. Cellule d'automatisation (12) selon l'une quelconque des revendications précédentes, **caractérisée en ce que** l'ouverture de chargement (26) est formée sur une partie avant (24) du logement (22).

8. Cellule d'automatisation (12) selon la revendication 7, **caractérisée en ce que** la partie (24) présente un segment de toit (54) qui peut être déplacé dans une position de recouvrement et dans une position d'ouverture.

9. Cellule d'automatisation (12, 70, 84) selon l'une quelconque des revendications précédentes, **caractérisée en ce qu'**un dispositif d'orientation (82) est prévu au premier emplacement d'empilement (34) pour orienter un empilement (16) de supports de pièces (18).

10. Cellule d'automatisation (12, 70, 84) selon l'une quelconque des revendications précédentes, **caractérisée en ce que** les emplacements d'empilement (34, 36, 38) sont agencés les uns derrière les autres dans une direction longitudinale (68) et **en ce que** l'ouverture de chargement (26) est orientée pour un chargement dans la direction longitudinale (68).

11. Système d'automatisation (10) comprenant une cellule d'automatisation (12, 70, 84) selon l'une quelconque des revendications précédentes et un système de transport sans conducteur (14) pour transporter un empilement (16) de supports de pièces (18).

12. Système d'automatisation (10) selon la revendication 11, **caractérisé en ce que** le système de sécurité (30) est conçu pour arrêter le système de transport sans conducteur (14) lorsque le système de sécurité (30) détecte une intervention sur l'ouverture de chargement (26).

13. Système d'automatisation (10) selon la revendication 11 ou 12, **caractérisé en ce que** le système de transport sans conducteur (14) est configuré pour enregistrer un processus de chargement au niveau de la cellule d'automatisation (12, 70, 84).

14. Système d'automatisation (10) selon la revendication 13, **caractérisé en ce que** le système de transport sans conducteur (14) est conçu pour communiquer à la cellule d'automatisation (12, 70, 84) une taille d'un empilement (16) des supports de pièces (18) à introduire à travers l'ouverture de chargement (26), et **en ce que** le système de sécurité (30) est conçu pour adapter une taille de la zone partielle (58) de la zone d'intervention (28) surveillée dans un mode de surveillance partielle à la taille communiquée de l'empilement (16) de supports de pièces (18).

15. Système d'automatisation (10) selon l'une quelconque des revendications 11 à 14, **caractérisé en ce que** le système d'automatisation (10) est conçu pour une communication sécurisée entre la cellule d'automatisation (12, 70, 84) et le système de transport sans conducteur (14).

16. Procédé (100) de chargement manuel d'une cellule d'automatisation (12, 70, 84) selon l'une quelconque des revendications 1 à 10, comprenant les étapes consistant à
a) isoler (104) le premier emplacement d'empilement (34) vers l'intérieur,
b) désactiver (106) le système de sécurité (30),
c) introduire et/ou retirer (108) un empilement (16) des supports de pièces (18) à travers l'ouverture de chargement (26),
d) activer (110) le système de sécurité (30),
e) libérer (112) le premier emplacement d'empilement (34).

17. Procédé (200) de chargement automatique de la cellule d'automatisation (12, 70, 84) d'un système d'automatisation (10) selon l'une quelconque des revendications 11 à 15, comprenant les étapes consistant à :
A) surveiller (204) l'ensemble de la zone d'intervention (28) au niveau de l'ouverture de chargement (26),
B) enregistrer (206) un processus de chargement automatisé au niveau de la cellule d'automatisation (12, 70, 84),
C) surveiller (208) une zone partielle (58), en particulier d'une zone partielle extérieure, de la zone d'intervention (28),
D) introduire et/ou retirer (210) un empilement (16) de supports de pièces (18) à travers l'ouverture de chargement (26) au moyen du système de transport sans conducteur (14),
E) surveiller (212) l'ensemble de la zone d'intervention (28).

18. Procédé de fonctionnement (300) pour un système d'automatisation (10) selon l'une quelconque des revendications 11 à 15, **caractérisé en ce qu'**au moins une session d'un procédé (100) selon la revendication 16 et au moins une session d'un procédé (200) selon la revendication 17 sont effectuées.

19. Procédé de fonctionnement (400) pour un système d'automatisation (10) selon la revendication 12, comprenant les étapes consistant à
K) exploiter (402) la cellule d'automatisation (12, 70, 84) et le procédé automatique (404) du système de transport sans conducteur (14) dans un environnement de la cellule d'automatisation (12, 70, 84), en particulier introduire et/ou retirer un empilement (16) de supports de pièces (18) à travers l'ouverture de chargement (26) au moyen du système de transport sans conducteur (14),
L) déclencher (406) le système de sécurité (30),
M) interrompre (408) le fonctionnement de la cellule d'automatisation (12, 70, 84) et arrêter (410) le système de transport sans conducteur (14) par l'intermédiaire du système de sécurité (30).
